(19) Europäisches Patentamt
European Patent Office
Office européen des brevets

(11) EP 0 928 966 B1

(12) **EUROPEAN PATENT SPECIFICATION**

(45) Date of publication and mention of the grant of the patent:
**24.02.2010 Bulletin 2010/08**

(51) Int Cl.:
***G01N 31/22*** *(2006.01)*

(21) Application number: **98100286.8**

(22) Date of filing: **09.01.1998**

(54) **Reactands for the determination of amines by chemical sensors**

Reagenzien zur Bestimmung von Aminen durch chemische Sensoren

Réactifs pour la détermination d'amines par des capteurs chimiques

(84) Designated Contracting States:
**BE CH DE ES FR GB IT LI NL SE**

(43) Date of publication of application:
**14.07.1999 Bulletin 1999/28**

(73) Proprietor: **Spichiger-Keller, Dr., Ursula**
**8820 Wädenswil (CH)**

(72) Inventors:
- **Mohr, Gerhard, Dr. dipl. Chem.**
  **8005 Zürich (CH)**
- **Spichiger, Ursula Prof. dipl. pharm.**
  **8005 Zürich (CH)**

(74) Representative: **Rüedi, Regula Béatrice et al**
**E. Blum & Co.**
**Patentanwälte VSP**
**Vorderberg 11**
**8044 Zürich (CH)**

(56) References cited:
**EP-A1- 0 507 154 DE-A- 3 329 936**

- **H. BÖHME: "ÜBER AMINALE UND HALBAMINALE VON A-KETOALDEHYDEN" ARCH. PHARMAZ., vol. 306, no. 3, 1973, WEINHEIM, DE, pages 227-236, XP002063561**
- **H. WITTMANN: "ZUR CHEMIE DER VICINALEN TRIKETONE" MONATSHEFTE FÜR CHEMIE, vol. 103, no. 5, 1972, pages 1253-1261, XP002063562**
- **K. PAPADOPOULOS: "CHEMILUMINESCENCE OF PROTECTED HEMIAMINAL N-METHOXYMETHYL-N'-METHYL-9,9'-BIACRILIDEN E IN HOMOGENOUS AND MICELLAR MEDIA" ANALYTICA CHIMICA ACTA, vol. 304, no. 1, 1995, pages 91-96, XP002063563**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 0 928 966 B1

Printed by Jouve, 75001 PARIS (FR)

## Description

### Background of the invention

The present invention relates to a method of determining aliphatic or cycloaliphatic, aromatic, primary, secondary or tertiary amines wherein the latter are brought into contact with specific keto compounds, whereby a hemiaminal or a zwitterion is formed reversibly upon contact of the amine with the keto compound. The hemiaminals differ from the parent keto compounds in their light absorption in the ultraviolet, visible or infrared region, or the formation of the hemiaminals is accompanied by the creation or quenching of a fluorescence or luminescence or a variation of a vibration frequency in e.g. surface acoustic wave (SAW) devices or in IR-spectroscopy, or a variation of conductivity. This method allows therefore the determination of various amines in specimens.

Corresponding devices for carrying out the method of determination contain said keto compound as the reactands, and the change in the property of the reactand, for example a change in the absorption spectrum, corresponds in its order of magnitude to the amine concentration of the specimens. These devices can therefore be used for the qualitative, quantitative or semiquantitative determination of the amine concentration of corresponding specimens.

### Description of the state of the art

The accurate and reliable determination of toxic substances such as amines has become an area of significant interest in recent years. A wide range of amines are pollutants in industrial and manufactoring areas due to their significant importance for the preparation of fertilizers, pharmaceuticals, tensides, biological buffer substances and colorants. Volatile amines can be found in agricultural areas, and their presence may be indicative for the quality of food, such as it is the case for fish products.

Several methods for the determination of amines have been presented so far. Chromatographic methods are widely used (Noffsinger, J. B.; Danielson, N. D. *J. Chromatogr.* **1987,** *387*, 520). However, they are not suitable for on-line monitoring of the analyte. Since there is an increasing demand for on-line measurements during industrial and biotechnical processes, reversible sensors are required. In the last decade sensor devices have been developed that are based on pH-electrodes.

Basic amines are monitored by the change of pH of an internal solution separated from the sample (Okada, M.; Matsushita, H. *J. Chem. Soc. Jpn., Ind. Chem. Sect.* **1969,** *72,* 1407).

The use of synthetic macrocyclic polyether derivatives of ortho-phenanthroline has increased the selectivity of potentiometric electrodes for primary amines (Zhang, Z. R.; Yu, R. Q. *Anal. Chim. Acta* **1994,** *285,* 81).

Furthermore, amperometric cobalt-based electrodes have been introduced for amine determination (Hidayat, A.; Hibbert, D. B.; Alexander, P. W. *Talanta* **1997,** *44,* 239).

Polymer coated piezoelectric sensors (Guiltbault, G. G.; Lopez-Roman, A.; Billedeau, S. M. *Anal. Chim. Acta* **1972,** *58,* 421; Zhou, X. C.; Ng, S. C.; Chan, H. S. O) and quartz-crystal microbalances Aoki, K.; Brousseau, L. C.; Mallouk, T. E. *Sens. Actuat. B* **1993,** *14,* 703) have been applied to measure amine vapours and amines in aqueous solution.

Recently, electrochemical amine sensors have been presented which are based on lipophilic calix[6]-arene esters dissolved in plasticized PVC Odashima, (K.; Yagi, K.; Tohda, K.; Umezawa, Y. Anal. Chem. 1993, 65, 1074; Chan, W. H.; Shiu, K. K.; Gin, X. H. Analyst 1993, 118, 863). These calix[6]arene ligands selectively interact with the protonated form of amines due to the interaction of the alkyl part of the amine with the lipophilic cavity and the ammonium moiety of the amine with the hydrophilic carboxy groups of the calix[6]arene.

Another approach for amine-sensing based on potential dyes and calixarenes was introduced for 2-phenethylamine as the analyte (Y. Kawabata, T. Yamashiro, Y. Kitazaki, T. Imasaka, Sens. Act. B, 1995, 29, 135) Chromogenic calix(8)arenes were also synthesized as potential reagents for the detection of amines but there was no attempt to use said compounds in reversible sensors (H. M. Chawla, K. Srinivas, J. Chem. Soc., Chem. Commun., 1994, 145, (2593). Chromogenic calix(4)arenes for the detection of trimethylamine have also been presented. Again the calix(4)arenes have not been used in reversible sensors, but only in irreversible test strips (M. McCarrick, S. J. Harris, D. Dermot, J. Mater. Chem. 1994, 4, 217.

A similar approach has been used for optically measuring primary amines Chan, W. H.; Lee, A. W. M; Wang, K. Analyst 1994, 119, 2809).

A fibre-optic fluorescing sensor for amine vapours was introduced based on 2-naphthol immobilized on poly (ethylene) oxide (Charlesworth, J. M.; McDonald, C. A. Sens. & Actuat. B 1992, 8, 137). This sensor generally responded to changes of pH caused by the basic amines. Consequently, a high selectivity comparable to that of the calix[6]arene-based sensor was not obtained.

Sensors based on Langmuir monolayers of porphyrins exhibited reaction with amines (T. Richardson, J. A. Hudson, R. A. W. Johnstone, Brit. UK Pat. Appl. 2279739) but this reaction was not based on a selective chemical

recognition of the amine. An approach to develop molecular sensors for determining the absolute configuration of chiral amines by using optically active azophenolic acerands has been introduced as well (T. Kaneda, Y. Sakata, Mem. Inst. Sci. Ind. Res. 1994, 51, 31).

In an entirely different field, the European patent No. 0 281 829 of Willi Möller AG, published on September 14, 1988, describes keto compounds which interact selectively with anions of oxa acids and form adducts therewith.

Examples of anions of oxa acids which are suitable for the formation of such adducts are anions of carboxylic acids, hydroxycarboxylic acids, ketocarboxylic acids and aminocarboxylic acids and anions of peptides, as well as anions of inorganic oxa acids, for example carbonate anions and phosphate anions.

In the European patent No. 0 507 154 also of Willi Möller AG trifluoroacetophenone derivatives have been reported to interact with alcohols, however, only when an appropriate catalyst was used.

Said keto compounds used in EP 0 507 154 have at least one strongly electron-withdrawing substituent and a $\pi$-electron system conjugated with the keto group. The preferred keto compounds which form adducts with oxa acids or alcohols are monoketones of the following formula A:

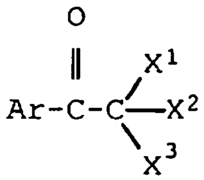

(A)

wherein

Ar is an aromatic or heteroaromatic group and
$X^1$, $X^2$ and $X^3$ independently of one another are hydrogen atoms, alkyl groups, alkenyl groups, alkynyl groups, fluorine atoms, chlorine atoms, bromine atoms or nitro groups, with the proviso, however, that at least one of these substituent selected from the group comprising fluorine atoms, chlorine atoms, bromine atoms or nitro groups.

Keto compounds of formula A above, in which

Ar is a phenyl group substituted in the paraposition to the keto group by a substituent selected from the group of substituents comprising dialkylamino groups, acylated monoalkylamino groups, carboxylic acid ester groups, carboxamide groups, alkyl groups, ether groups, thioether groups and sulphoxide groups, and also wherein
$X^1$, $X^2$ and $X^3$ are fluorine atoms,

are described in the publication by Christopher Behringer, Beatrice Lehmann, Jean-Pierre Haug, Kurt Seiler, Werner E. Morf, Karel Hartman and Wilhelm Simon in Analytica Chimica Acta, volume 233, 1990, pages 41-47. In said publication, the selectivity of said trifluoromethyl ketons for carbonate anions compared with chloride anions is determined and the formation of hydrates of these compounds under the action of moisture was also investigated.

The objective of the present invention was to develop novel sensors which have a high specificity for aliphatic, aromatic and cycloaliphatic amines. With said amines, the sensor should yield reaction products which differ in their light absorption in the ultraviolet, visible or infrared wavelength region from the starting material used to prepare them, or with which a fluorescence or luminescence is created or quenched or a variation of a vibration frequency in e.g. surface acoustic wave (SAW) devices or in IR-spectroscopy, or a variation of conductivity is realized on contact with the amine to be determined. Furthermore, the sensor to be used should not exhibit the disadvantages encountered with systems for the enzymatic determination of amines.

This objective was achieved by means of the method according to claim 1. Preferred embodiments are mentioned in the dependent claims.

It was found, surprisingly, that a method of determining amines can be carried out by using specific keto compounds which are either novel keto compounds or keto compounds known from the literature, including those of formula A given above. These studies have also shown that when the keto compounds come into contact with the primary, secondary and tertiary amines to be determined, they are reversibly converted to the corresponding hemiaminals or zwitterions, and it has further been found that the hemiaminals or zwitterions differ from the keto compounds in their light absorption in the ultraviolet, visible or infrared wavelength region, or that the formation of the hemiaminals from the keto compounds is accompanied by the creation or quenching of a fluorescence or luminescence or that a variation of a vibration frequency or a variation of conductivity could be detected.

In contrast to the determination of alcohols in EP-507 154, the ligands surprisingly do not require at all any

catalyst incorporated into the membrane in order to reversibly and rapidly respond to amines and to give signal changes in the visible spectral range.

Brief description of the Figures

Figure 1 shows the absorbance spectra of a 18 μM solution of *N,N*-dioctylaminophenyl-4'-trifluoroacetylazobenzene ($ETH^T$ 4001) in diethylether and after addition of 1-butylamine showing the decrease of absorbance at 487 nm and the increase at 423 nm on formation of the hemiaminal.

Figure 2 shows the absorbance spectra of the sensor membrane M1 in contact with dry nitrogen and different concentrations of aqueous 1-butylamine. When changing from nitrogen to buffer, the diol is formed, whereas, when changing from plain buffer to aqueous 1-butylamine, formation of the hemiaminal occurs. Both types of reactions are fully reversible.

Figure 3 shows a work function of the sensor membrane M1 on exposure to aqueous primary amines at pH 13.0; (MA, methylamine; EA, ethylamine; PA, 1-propylamine; BA, butylamine, HA, 1-hexylamine).

Figure 4 shows a work function of M1 on exposure to aqueous secondary, tertiary and aromatic amines at pH 13.0.

Figure 5 shows the long-term stability of M1 on exposure to 1-propylamine in 0.1 M sodium hydroxide solution.

Figure 6 shows a fluorescence spectra of M2 on exposure zero and 0.01 M 1-butylamine at pH 13.0.

Figure 7 shows a work function of M2 on exposure to aqueous amines at pH 13.0; (MA, methylamine; EA, ethylamine; PA, 1-propylamine; BA, 1-butylamine, HA, 1-hexylamine).

Detailed description of the invention

Hence, one subject of the present invention is a method of determining primary, secondary and tertiray amines of the formula

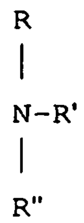

wherein

R, R' and R'' are independently from each other hydrogen, aliphatic, aromatic or cycloaliphatic groups with the proviso that not all three subtituents R, R' and R'' could be hydrogen. This method is characterized in that the amines are brought into contact with a keto compound herein called "reactand" of the formula I:

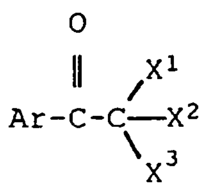

(I)

wherein

Ar is an unsubstituted or substituted, mononuclear or polynuclear aromatic group or an unsubstituted or substituted, mononuclear or polynuclear heterocyclic group of aromatic character, the substituents being non-polar substituents, substituents with weakly polar properties, substituents with basic properties, substituents having electron-donor or -acceptor groups, substituents to immobilize the reactand attaching (covalently) to a polymer (e.g. of a support material) and/or chromophoric groups or groups which induce a fluorescence or luminescence or a variation of a vibration frequency or a variation of conductivity, and

$X^1$, $X^2$ and $X^3$ independently from one another are hydrogen atoms, alkyl groups, alkenyl groups, alkynyl groups,

fluorine atoms, chlorine atoms, bromine atoms, cyano or nitro groups, with the proviso, however, that at least one of the substituents $X^1$, $X^2$ and $X^3$ is a strongly electron-withdrawing substituent selected from the group comprising fluorine atoms, chlorine atoms;

a hemiaminal or a zwitterion of formula II:

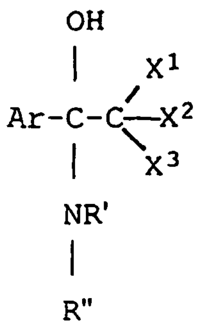 or 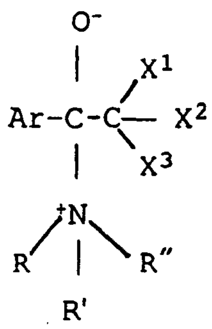 (II)

being reversibly formed upon contact of the amino with the keto compound of formula I and the keto compound of formula I differing from the hemiaminal or zwitterion in its light absorption in the ultraviolet, visible or infrared region, or the formation of the hemiaminals being accompanied by the creation or quenching of a fluorescence or luminescence or a variation of a vibration frequency or a variation of conductivity.

The term "reactand" as used herein designates chemical compounds being involved in a reversible chemical recognition of a target compound or an analyte in a specific media such as in aqueous or non-aqueous solutions or in the gas phase. In contrast to the well-known complexing agents (ligands) that interact with the target compound by characteristic coordination bonds, said "reactands" induce a reversible chemical reaction such as the reversible generation of an aminal, hemiaminal or Schiff base.

The chemical reactions of the ketones of formula I with primary, secondary or tertiary amines are shown in the following reaction scheme

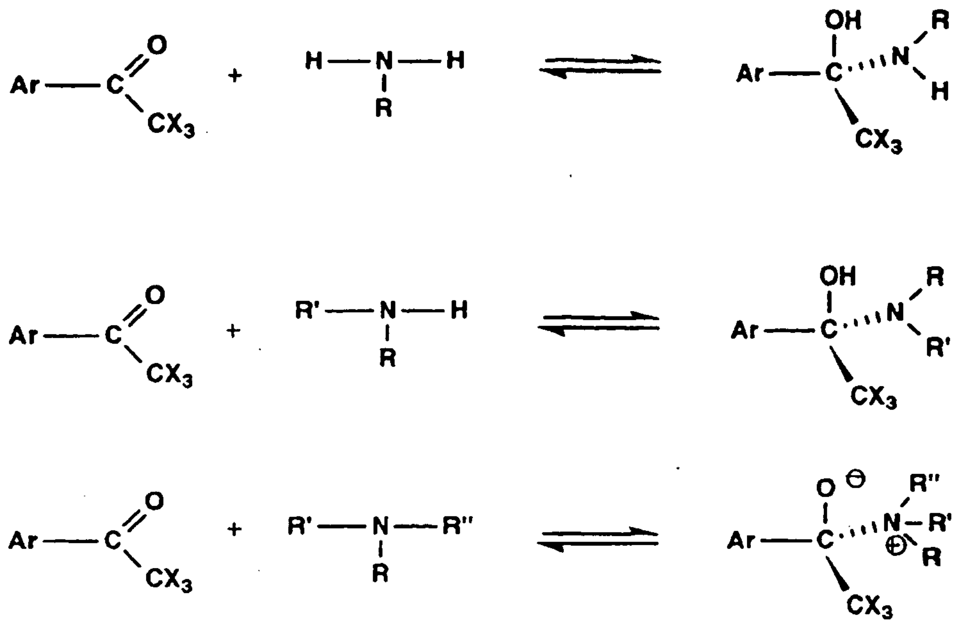

The method according to the invention makes it possible to carry out a qualitative, quantitative or semiquantitative determination of amines in liquid or gaseous samples, for example in industrial or agricultural (waste) solutions or suspensions or liquid or gaseous samples of biological origin, for example urine, blood, blood serum, blood plasma, or food products by bringing these samples into contact with a chemical sensor which contains a keto compound of formula

I as the reactand (host compound).

Corresponding devices for carrying out the method according to the invention can be used for the determination of aminals and contain, as the reactand, a keto compound of formula I which, on contact with the amine to be determined, of the formula

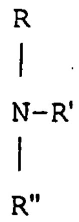

in which R, R' and R'' are hydrogen or aliphatic, aromatic or cycloaliphatic groups, with the proviso that not all three groups R, R' and R'' could be hydrogen, undergoes a reaction to form a hemiaminal or a zwitterion, the keto compound of formula I differing from said hemiaminal or zwitterion of formula II in its light absorption in the ultraviolet, visible or infrared region, or the formation of the hemiaminal being accompanied by the creation or quenching of a fluorescence or luminescence or a variation of a vibration frequency or a variation of conductivity.

A further subject of the present invention is the use of a device containing a keto compound of formula I for the qualitative, quantitative or semiquantitative determination of amines of the formula

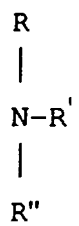

in which R, R' and R'', represent independently from each other hydrogen, an alkyl group, a cycloalkyl, aromatic or heterocyclic group, with the proviso that not all three groups R, R' and R'' could be hydrogen, this use being characterized in that liquid or gaseous samples whose amine content is to be determined are brought into contact with the device and the keto compound of formula I present in the device as the indicator reacts with the amine to form a hemiaminal or zwitterion, thereby causing a change in the absorption spectrum, which corresponds in its order of magnitude to the amine concentration.

In preferred keto compounds of formula I used for carrying out the method according to the invention, Ar is a benzene ring, a naphthalene, phenanthrene or anthracene skeleton or a mononuclear or polynuclear heterocyclic group from the group comprising thiophene, furan, benzofuran and benzothiophene, and preferably a mononuclear or polynuclear heterocyclic group of aromatic character which has at least one nitrogen atom as the heteroatom, preferably pyrrole, diazole, triazole, pyridine, 1,2-diazine, 1,3-diazine, 1,4-diazine (pyrazine), 1,3,5-triazine, 1,2,4-triazine or 1,2,3-triazine, tetrazine, thiazole, monoazanaphthalenes such as 1-azanaphthalene (quinoline) and 2-azanaphthalene (isoquinoline), diazanaphthalenes, triazanaphthalenes, indole, carbazole, monoazaanthracenes, monoazaphenanthrenes, for example acridine and phenanthridine, diazaanthracenes and diazaphenanthrenes, for example phenanthroline, and triaza- and tetra-aza-anthracenes and -phenanthrenes or metal organic complexes of said heterocyclic compounds such as metalloporphyrines e.g. palladium, cobalt, iron, gallium, indium, manganese, copper, osmium, rhodium or chromium porphyrines or metallophenanthrolines or metallobipyridyl complexes in particular with ruthenium, chromium, platinium, copper, osmium, rhodium or rhenium as metal centers.

In the keto compounds of formula I or the hemiaminals of formula II, the aromatic or heteroaromatic groups Ar can be unsubstituted or they can carry one or more substituents which are non-polar substituents, substituents with weakly polar properties or substituents with basic properties and/or which are chromophoric groups, and/or which are substituents to immobilize the reactand by attaching it (covalently) to a polymer (e.g. of a support material), or groups which are capable of inducing a fluorescence or luminescence or a variation of a vibration frequency in e.g. surface acoustic wave (SAW) devices or in IR-spectroscopy, or a variation of conductivity.

A chromophoric group, as used herein, could be any unsaturated or conjugated system being able to alter the

light absorbance or another physical or chemical property so to determine amines upon formation of corresponding hemiaminals or zwitterions.

The following may be mentioned as examples of substituents with non-polar or only weakly polar properties which can be bonded to the aromatic or heteroaromatic groups Ar:

halogen atoms, nitro groups, optionally substituted alkyl groups, optionally substituted alkenyl groups having one or more carbon-carbon double bonds, optionally substituted alkynyl groups, optionally substituted cycloalkyl groups, optionally substituted aryl groups and optionally substituted heterocyclic groups, the substituents which may be present in these groupings again being themselves non-polar substituents, substituents with only slightly polar properties or substituents with basic properties. Further examples which may be mentioned of non-polar or slightly polar substituents which can be bonded to the aromatic or heteroaromatic group Ar are ether or hydroxyl groups of the formula

$-O-R^1$

and sulphur-containing groups of the formula

$-S-R^1$, $-SO-R^1$ and $-SO_2-R^1$,

$R^1$ in these grouping being hydrogen, optionally substituted alkyl groups, optionally substituted alkenyl groups, optionally substituted cycloalkyl groups, optionally substituted aryl groups or optionally substituted heterocycles or being said non-polar or slightly polar substituents of the aromatic or heteroaromatic group Ar, nitrile groups, carboxylic acid ester groups, carboxamide groups, sulfonic acid ester groups, sulphonamide groups or esterified hydroxyl groups.

A preferred group of substituents which can be bonded to the aromatic or heteroaromatic groups Ar of the keto compounds of formula I comprises substituents with alkaline properties or electron donor and/or acceptor groups, of which particularly preferred substituents are primary, secondary and tertiary amino groups or acylated amino groups, i.e. groupings of the following formula:

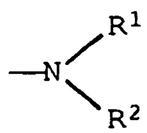

in which grouping

$R^1$ and $R^2$ independently of one another are hydrogen atoms, optionally substituted alkyl groups, optionally substituted acrylic- or methacrylic or styrene groups, optionally substituted alkenyl groups, optionally substituted alkynyl groups for copolymerisation and covalent linking, optionally substituted cycloalkyl groups, optionally substituted aryl groups, optionally substituted heterocyclic groups or acyl groups of the formula

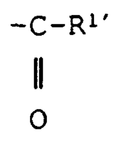

or of the formula

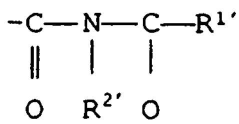

in which acyl groups

$R^{1'}$ and $R^{2'}$ independently of one another are hydrogen atoms, optionally substituted alkyl groups, optionally substituted alkenyl groups, optionally substituted alkynyl groups, optionally substituted cycloalkyl groups, optionally substituted aryl groups or optionally substituted heterocyclic groups, or

$R^1$ and $R^2$ form, together with the nitrogen atom to which they are bonded, a heterocyclic group whose ring structure can be free of other heteroatoms or may have additional heteroatoms, preferably oxygen, sulphur or nitrogen, whereby it is possible for said heterocyclic groups to be unsubstituted or substituted by substituents having non-polar, slightly polar, polar or basic properties.

Any combination of the substituents is also possible for example aryl substituted alkyl groups, alkyl groups which are bonded via ether groupings and substituted by primary, secondary or tertiary amino groups or acylamino groups, and similar substituents.

In a particularly preferred group of keto compounds of formula I used for carrying out the method according to the invention, chromophoric groups or groups inducing a fluorescence or luminescence, for example azo groups, aromatic or heteroaromatic groups bonded via azo groups or systems with two or more conjugated double bonds or conjugated triple bonds or conjugations of double bonds, triple bonds and aromatic systems or heteroaromatic systems, are also bonded to the aromatic or heteroaromatic group Ar.

Preferred examples, which may be mentioned of keto compounds according to formula I having a chromophoric group, are the corresponding keto compounds of formula III and IV:

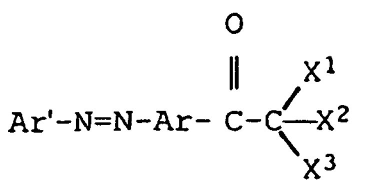

(III)

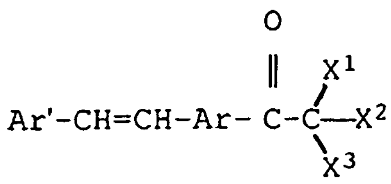

(IV)

wherein

Ar and Ar' independently from one another are substituted or unsubstituted, mononuclear or polynuclear aromatic groups or substituted or unsubstituted, mononuclear or polynuclear heterocyclic groups of aromatic character, and

$X^1$, $X^2$ and $X^3$ independently from one another are hydrogen atoms, alkyl groups, alkenyl groups, alkynyl groups, fluorine atoms, chlorine atoms, bromine atoms, cyano or nitro groups, with the proviso, however, that at least one of the substituents $X^1$, $X^2$ and $X^3$ is a strongly electron-withdrawing substituent selected from the group comprising fluorine atoms, chlorine atoms, bromine atoms, cyano or nitro groups.

In a particularly preferred embodiment of the inventive method, N,N-dioctylaminophenyl-4'-trifluoroacetyl-azobenzene (formula III) and/or N,N-dioctylamino-4'-trifluoroacetylstilbene (formula IV) are used as chromogenic or luminescent compounds.

In the method according to the invention, when the azoketo compounds of formula III or the stilbene keto compound of formula IV come into contact with the amines to be determined, of the formula

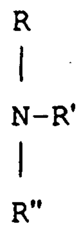

a corresponding azohemiaminal of formula V or an azo-zwitterion of formula VI is formed:

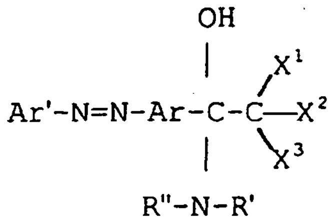 (V) or 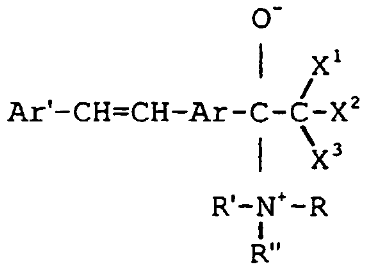 (VI)

In the azoketo compounds of formula III or the stilbene keto compound of formula IV which can be used for carrying out the method according to the invention, and also in the azohemiaminals or zwitterions of formula V or the hemiaminals or zwitterions of the stilbene keto compound of formula VI formed therefrom upon contact with the amine, both the group Ar and the group Ar' are preferably a benzene ring, a naphthalene, phenanthrene or anthracene skeleton or a mononuclear or polynuclear heterocyclic group from the group listed above as preferred heterocyclic groups in connection with the keto compounds of formula I and the hemiaminals or zwitterions of formula II.

In the azohemiaminals or zwitterions of the formulas V and VI and in the keto compounds of the formulas III and IV from which they were formed, both the groups Ar and Ar' can be identical or different mononuclear or polynuclear aromatic groups, or both the group Ar and the group Ar' can be a mononuclear or polynuclear heterocyclic group of aromatic character, especially one of the preferred group of heterocyclic groups indicated above.

It has been found, however, that in respect of the change in optical properties on formation of the hemiaminal, particularly advantageous properties are achieved when one of the two groups Ar and Ar' in the keto compounds of the formulas III or IV is a mononuclear or polynuclear aromatic group and the other of these two groups is a mononuclear or polynuclear heterocyclic group of aromatic character. Particularly preferred among these compounds are those in which the group Ar is an aromatic group, preferably a benzene ring, and the group Ar' is a heteroaromatic group.

If the group Ar in the azoketo compounds or stilbene keto compounds of the formula III or IV is a benzene ring, the azo group on said benzene ring is preferably located in the para-position to the keto group, because this affords optimal possibilities of conjugation from the carbonyl group via the aromatic ring Ar and the azo group to the system Ar', which can be an aromatic or heteroaromatic system. The same is true for the stilbene keto compound.

The investigations carried out have further shown that such ketoazo compounds of formula III or stilbene keto compounds of formula IV have particularly advantageous properties if the group Ar is an aromatic group and the group Ar' is a heteroaromatic group containing nitrogen, sulphur or, particularly preferred, both nitrogen as well as sulphur, for example a thiazole.

In the hemiaminals and azohemiaminals of formulae II, V and VI formed in the method according to the invention, and the keto starting materials of formula I, III and IV, it is essential for at least one of the groups $X^1$, $X^2$ and $X^3$, preferably two of said substituents and particularly preferably all three of said substituents, to be strongly electron-withdrawing substituents selected from the group comprising fluorine atoms, chlorine atoms, bromine atoms, cyano or nitro groups. In particularly preferred compounds of this type, all of said groups are fluorine atoms and/or chlorine atoms, and particularly preferred keto compounds of formula I or III or IV, or hemiaminals of formula II or V or VI, are those in which the grouping of the formula

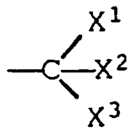

is a trifluoromethyl group.

Preferably, the determination of amines by the method according to the invention is carried out in such a way that the keto compound of formula I is present on or in a support, preferably a polymer material, and that the conversion of the keto compound of formula I to the hemiaminal or zwitterion of formula II takes place on or in this support.

Thus, in this case, the keto compound of formula I present on the support can be used as a reactand for the presence of said amines, because the physicochemical property of said reactand changes when the keto compound of formula I is converted to the corresponding novel hemiaminal or zwitterion of formula II.

A device for the determination of amines of the formula

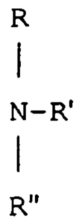

wherein

R, R' and R'' are hydrogen or aliphatic, aromatic or cyloaliphatic groups, with the proviso that not all three groups R, R' and R'' could be hydrogen,

by the method according to the invention, preferably has an ultraviolet, visible or infrared region, or in which a fluorescence or luminescence is created or quenched, as soon as this optical sensor comes into contact with an amine, the sensor, as an optical indicator of said type, containing a keto compound of formula I:

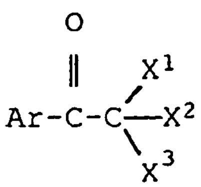

(I)

which, when it comes into contact with the amine to be determined, is converted to the hemiaminal or zwitterion of formula II:

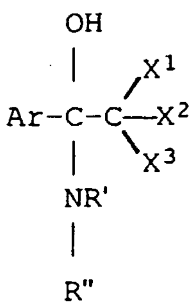

or

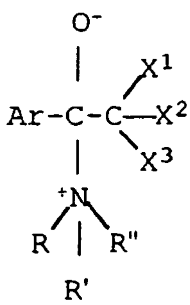

(II)

which differs from the keto compound of formula I in respect of said optical property, Ar, $X^1$, $X^2$ and $X^3$ being defined

as above and preferably all the groups $X^1$, $X^2$ and $X^3$ in said keto compounds of formula I being fluorine atoms.

When using this device for the qualitative, quantitative or semiquantitative determination of amines in samples, the given sample, for example an agricultural or industrial suspension or solution or a liquid or gaseous sample of biological origin, for example urine, blood or respiratory air, is brought into contact with the optical sensor.

Preferred amines of the formula

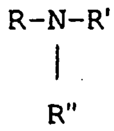

which can be determined in aqueous or gaseous media with the help of the method according to the invention are those in which the groups R, R' and R'' are independently from each other hydrogen and at least one alkyl group having 1-10 carbon atoms, especially 1-6 carbon atoms or a substituted or unsubstituted aromatic heteroaromatic or heterocyclic groups, whereby the alkyl substituent has 1-10 carbon atoms, especially 1-6 carbon atoms. Thus, the amines to be determined comprise among others choline, amino acids, enantiomeric amines, catecholamines, purines, aniline-derivatives.

The keto compounds of formula I or the azoketo compounds of formula III or IV are preferably present in or on a support material (supports), to which the keto compounds could optionally be attached by covalent bonds. Also, in the devices used according to the invention, the optical sensor preferably contains a support in which or on which the keto compound of formula I, for example an azoketo compound of formula III or IV is present.

Preferred supports of this type are lipophilic and also polar polymer materials, for example cellulose, cellulose derivatives, hydrogels, like protein containing materials, polysiloxanes, methacrylates, acrylates, polyurethanes, polyacrylamides, polycarbonate materials, for example silicone rubber, polymer materials based on polyesters, polyamides or polyethers, or homopolymers or copolymers of ethylenically unsaturated monomers. Examples which may be mentioned of homopolymers and copolymers of ethylenically unsaturated monomers are homopolymers and copolymers of the following monomer components: styrene, vinyl acetate, vinylalcohol, butadiene, ethylene, propylene and especially halogenated unsaturated monomers, for example homopolymers or copolymers of chlorinated or fluorinated, ethylenically unsaturated monomer materials, especially vinyl chloride or vinylidene chloride.

Optionally, said polymer materials in which the keto compounds of formula I, for example the azoketo compounds of formula III or the stilbene keto compound of formula IV, are embedded, can also contain a plasticizer, whereby plastizicers with relatively strongly lipophilic properties are generally being preferred.

Ether plasticizers and ester plasticizers have proven to be particularly suitable as plasticizers for said polymer materials, for example those based on polyvinyl chloride homopolymers and copolymers.

Particularly suitable ether plasticizers for said polymer materials, are for example those based on polyvinyl chloride homopolymers and copolymers.

Particularly suitable ether plasticizers are those in which both an aromatic group and a longer-chain aliphatic group are bonded to the ether oxygen atom, for example o-nitrophenyl octyl ether or o-cyanophenyl octyl ether.

Examples of ester plasticizers which may be mentioned are those based on dicarboxylic acid diesters and tetracarboxylic acid tetraesters, for example those in which the ester-forming alcohol is a longer-chain aliphatic alcohol, for example an alkanol having 4 to 24 carbon atoms, preferably 5-12 carbon atoms. Examples of said dicarboxylic acid diesters which may be mentioned are those of adipic acid and sebacic acid, for example bis(2-ethylhexyl)sebacetate, and examples of tetracarboxylic acid tetraesters which may be mentioned are those of benzophenonetetracarboxylic acids and benzhydroltetracarboxylic acids, which are described for example in US patents 4 783 496 and 4 857 573 of Simon et al.

The keto compounds of formula I are also capable of forming hydrates with water; said hydrates possessing a similar structure to that of the hemiaminals of formula II. The hydrates in question are in fact of the following formula VII:

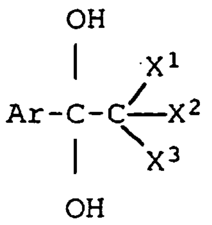

(VII)

This hydrate formation is again a base-catalyzed reaction. Due to the higher nucleophilicity of amines, it is nevertheless possible, surprisingly, to determine amines in aqueous solutions with good sensitivities using the devices according to the invention, particularly high sensitivities being attained when the keto compound of formula I is embedded in a polymer material.

As mentioned before, it is already known from the European patent 0 281 829 that keto compounds of formula A form adducts with oxa acids, for example carboxylic acids. It is also known from EP 0 507 154 that keto compounds of formula A form hemiacetals. It was therefore to be expected that the devices according to the invention could not be used for the determination of amines in systems containing organic acids or alcolhols as a further component. Contrary to this assumption, however, it has now been found that the devices according to the invention are outstandingly suitable for the determination of amines in aqueous systems or amines in the gaseous phase. Under these conditions, alcohols display a rather slow response in the range of hours, notably without the presence of a suitable catalyst as the case for the alcohol determination.

A comparison of the keto compounds of formula I with the hemiaminals of formula II shows that the keto compounds of formula I exhibit conjugation between the carbon-oxygen double bond of the keto groups and the aromatic systems Ar of the aromatic or heteroaromatic group, and that this conjugation is reduced by the formation of the hemiaminal. As expected, the light absorption of the keto compounds of formula I is therefore shifted to shorter wavelengths, i.e. hypsochromically, when the hemiaminal is formed.

The practical procedure is for instance to choose a wavelength at which the keto compound shows a strong absorption and to observe the disappearance of the absorption at said wavelength on the basis of the formation of the hemiaminal with the amine to be determined. Alternatively the variation of a vibration frequency or of the conductivity could be examined and used for the determination of amines. It has been found that this method affords quantitative determinations of the amine with good reproducibility.

As already mentioned, amines of the formula

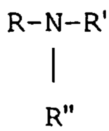

wherein R, R' and R'' are independently from each other hydrogen or aliphatic or cycloaliphatic groups, with the proviso that not all three groups R, R' and R'' could be hydrogen, are basically suitable for the formation of the hemiaminals of formula II with the keto compounds of formula I. However, preferred amines of the above formula which form hemiaminals with the keto compounds of formula I are amines having 1-10 carbon atoms. It has further been found that primary amines are particularly preferred to secondary and tertiary amines in the formation of the hemiaminal or the zwitterion and ammonia is considerably discriminated.

Accordingly, preferred amine components with which the hemiaminals of formula II are formed are primary amines having 1-6 carbon atoms, especially 1 to 4 carbon atoms.

The invention will now be illustrated by means of suitable Examples which are not construed to be limiting the scope of the invention.

Example 1 - General parameters

Apparatus: The pH of buffer solutions are measured with an Orion 920A pH-meter. The absorption spectra of dissolved dyes and of sensor layers are recorded on an Uvikon 942 spectrophotometer at 22 ± 1 °C. The measurements are performed in a flow-through cell fixed in the spectrophotometer by pumping the sample solutions at a flow rate of 1.5 ml $min^{-1}$ using a Perpex peristaltic pump (Jubile, Switzerland).

Reagents: All amines are of analytic reagent grade. For membrane preparation, poly(vinyl chloride) (PVC, high molecular weight), bis(2-ethylhexyl)sebacate (DOS), and tetrahydrofuran (THF) are obtained from Fluka. As microporous teflon membranes, Fluoropore FHUP04700 (Millipore, Eschborn, Germany), with a pore size of 0.5 μm and a diameter of 47 mm, are used. The synthesis and the optical properties of N,N-dioctylaminophenyl-4'-trifluoroacetyl-azobenzene ($ETH^T$ 4001) and N,N-dioctylamino-4'-trifluoroacetylstilbene ($ETH^T$ 4004) have already been described in detail in the publications of Mohr, G. J.; Spichiger, U. E. *Proc. SPIE* **1997,** *3105,* 130 and in Mohr, G. J.; Spichiger, U. E. *Anal. Chim. Acta* **1997,** *344,* 215.

The amine solutions: The amine solutions are prepared by dissolving the respective amount of the amines in 0.1 M sodium hydroxide solution. Due to the high pH of 13.0, the amines are basically present in the electrically neutral form and not in the ammonium form. The correct amine concentration was calculated by using the Henderson-Hasselbach equation and the $pK_a$ values of the respective amines, according to the method as described by Schilling, M. L. M.; Roth, H. D.; Herndon, W. C. in J. Am. Chem. Soc. 1980, 102, 4271.

Example 2 : Preparation of the membranes M1 and M2 for the optical determination of amines in basic solutions

The sensor membrane M1 is obtained by dissolving 80 mg of PVC, 160 mg of bis(2-ethylhexyl)sebacate (DOS) and 2.0 mg of *N,N*-dioctylaminophenyl-4'-trifluoroacetyl-stilbene ($ETH^T$ 4004) in 1.5 ml of THF. A dust-free glass plate is placed in a spin coating device with a THF-saturated atmosphere. 0.2 ml of the solution is transferred onto the rotated glass support. Then, the resulting membranes are placed in ambient air for drying.

The sensor membrane M2 is obtained by dissolving 80 mg of PVC, 160 mg of bis(2-ethylhexyl)sebacate (DOS) and 1.0 mg of *N,N*-dioctylaminophenyl-4'-trifluoroacetyl-azobenzene ($ETH^T$ 4001) in 1.5 ml of THF. After the preparation of the membranes, a thin layer of microporous white PTFE (polytetrafluoroethylene) is mechanically fixed on the sensor layer.

Example 3 : Determination procedure

The determination of amines in aqueous solution is performed using the membranes M1 and M2 prepared according to Example 2 in the measuring cells described in the publication by Seiler, K.; Morf, W.E.; Rusterholz, B. and Simon, W. in *Anal. Sci.,* (1989) 557. The determination is performed in cells with two quartz glass plates on which said membranes are mounted in the manner described in said publication, no corresponding membranes are mounted on the quartz glass plates in the cell used for purposes of comparison.

When performing the determination, the measuring cell and the reference cell are placed in a spectrophotometer for the determination of the absorption or of the luminescence in the ultraviolet region and in the visible region, and the change in the absorption or of the luminescence spectrum in the indicated wavelength region was determined.

Calculations: The reaction of the ligand in the membrane phase with the amine in the aqueous solution is described by:

$$L_{memb.} + A_{aqu.} \Leftrightarrow AL_{memb.} \quad (1)$$

whereby $L_{memb.}$ is the concentration of the free ligand, $A_{aqu.}$ is the amine activity, $AL_{memb.}$ is the concentration of the complex in the membrane phase, and K the combined equilibrium constant for extraction of the amine from the aqueous into the membrane phase and the subsequent complexation. The degree of complexation φ is defined as the ratio between the concentration of the complex in the membrane and the total ligand concentration and is described in (2)

$$\varphi = (AL_{memb.})/(L_{memb.}) + (AL_{memb.}) = (S - S_{AL})/)S_L - S_{AL}) \quad (2)$$

wherein S is the absorbance or fluorescence signal at a certain amine concentration, $S_{AL}$ the signal of the complex and $S_L$ the signal of the ligand.

Upon combination of the equations (1) and (2) the dependence of absorbance (or fluorescence) of the sensor membranes is obtained which allows to calculate the sensitivity and selectivity of M1 and M2 towards the investigated amines:

$$S = A_{aqu.} (S_L - S_{AL}) / (K^{-1} + A_{aqu.}) + S_{AL} \quad (3)$$

Optical Properties of the Chromogenic Ligands in Solution

The investigated ligands consist of the azo or stilbene chromophore and terminal donor-acceptor substituents. The alkylamino group acts as an electron donor and, furthermore, the long alkyl chains attached to the nitrogen atom render the ligand highly lipophilic. This enables dissolution in lipophilic polymer matrices and prevents from leaching on exposure to analyte samples. The acceptor part of the chromophore is the trifluoroacetyl group which exhibits a strong electron-withdrawing capacity due to both the carbonyl and the trifluoromethyl group. At the same time, the trifluoroacetyl group acts as a selective ligand for nucleophilic reactands (target compounds) such as amines and, upon chemical reaction with these molecules, changes its acceptor capacity. The conversion of the trifluoroacetyl group into a hemiaminal or zwitterion results in a significant decrease in its acceptor capacity and, therefore, in a blue-shift of the absorbance spectrum.

Prior to the application of the dyes in sensor layers, the azo derivative *N,N*-dioctylaminophenyl-4'-trifluoroacetyl-azobenzene (ETH$^T$ 4001) has been characterized in various amine solutions. The corresponding absorbance maxima and extinction coefficients are shown in Table 1

Table 1 : Absorbance Maxima and Molar Extinction Coefficients of *N,N*-dioctylaminophenyl-4'-trifluoroacetylazobenzene (ETH$^T$ 4001) in Different Solvents

| *solvent* | $\lambda_{max.}$ *[nm]* | $\varepsilon$ *[l mol$^{-1}$cm$^{-1}$]* | *solvent* | $\lambda_{max.}$ *[nm]* | $\varepsilon$ *[l mol$^{-1}$cm$^{-1}$]* |
|---|---|---|---|---|---|
| diethylether | 476 | 36600 | tripropylamine | 416 | 23400 |
| methanol | 430 | 32100 | 1-butylamine | 422 | 19000 |
| diethylamine | 418 | 20200 | iso-butylamine | 420 | 16800 |
| triethylamine | 415 | 16300 | tert-butylamine | 416 | 22300 |
| 1-propylamine | 422 | 17300 | pyrrolidine | 426 | 17800 |
| iso-propylamine | 418 | 31600 | aniline | 459 | 27800 |
| dipropylamine | 418 | 24200 | pyridine | 464 | 20700 |

The absorbance maximum of *N,N*-dioctylaminophenyl-4'-trifluoroacetyl-azobenzene (ETH$^T$ 4001) in diethylether corresponds to the trifluoroacetyl form of the ligand. Upon reaction with amines, the trifluoroacetyl form is converted into the hemiaminal and a shift of the maxima from around 480 nm to around 420 nm occurs. The absorbance maxima of *N,N*-dioctylaminophenyl-4'-trifluoroacetyl-azobenzene (ETH$^T$ 4001) in aliphatic primary, secondary and tertiary amines are comparable, although it is observed that the reaction rate of the ligand with the amine is dependent on the structure of the amine. Primary amines react within minutes to form the hemiaminal, whereas the reaction with tertiary amines is in the range of hours.

Aniline and pyridine do not show the significant shift of absorbance which indicates, that the conversion into the hemiaminal does not take place. It is assumed that both sterical hindrance and lower nucleophilicity cause this specific behaviour.

When dissolving *N,N*-dioctylaminophenyl-4'-trifluoroacetyl-azobenzene (ETH$^T$ 4001) in diethylether and adding different amounts of 1-butylamine, equillibrium is reached after approximately 10-15 min (see Figure 1). Therefore, the ligand may be applied for quantitative determination of amines in organic solutions. The fast reaction rate is in clear contrast to the reaction with primary alcohols, which under similar conditions require around 24 h for equilibrium. This difference is presumably due to the higher nucleophilicity of amines over alcohols.

Sensor Response of M1. On exposure to buffer solutions containing 1-butylamine, membrane M1 shows a distinct response by giving a decrease of the absorbance at around 490 nm. At the same time a new maximum is formed at around 420 nm which corresponded to the hemiaminal form of the dye (see Figure 2). Figure 2 also shows the diol formation which occurrs when the dry sensor membrane was exposed to 0.1 M sodium hydroxide solution. Both reactions, namely the diol and the hemiaminal formation were fully reversible.

The sensor membrane M1 exhibits highest sensitivity to 1-butylamine in the 1- 100 mM range with relative signal changes up to 90% at 500 mM 1-butylamine. The detection limit (LOD) was found to be 0.8 mM. The relative standard deviation for 5 and 50 mM 1-butylamine (n = 8) is determined to be 2.0 and 2.7%, respectively, the measurements being performed during a period of 24 h. The forward response time $t_{95}$ (for 95% of the total signal change to occur) is

in the range of 10 min, whereas the time for the reverse response is in the range of 5 min. The membrane M1 is also used to measure other primary aliphatic amines and ammonia. The results are shown in Figure 3 and 4 indicate the dependence of the response on the lipophilicity of the respective amine. The response of the membrane M1 to secondary, tertiary and aromatic amines is shown in Figure 5 and the $\log K_{opt.}$ values in Table 2.

Table 2: Selectivity Coefficients ($\log K_{opt}$) of M1 for Aliphatic and Aromatic Amines in Comparison to 1-Butylamine

| *amine* | *$\log K_{opt}$* | *amine* | *$\log K_{opt}$* |
|---|---|---|---|
| ammonia | -2.30 | 1-butylamine | 0.00 |
| methylamine | -1.23 | tert-butylamine | -1.77 |
| ethylamine | -1.15 | 1-hexylamine | 0.93 |
| diethylamine | -1.61 | pyridine | -1.66 |
| triethylamine | -1.07 | aniline | -1.54 |
| 1-propylamine | -0.54 | | |
| iso-propylamine | -1.77 | | |

During one week of continuous measurements with aqueous amines (up to concentrations of 1.0 M amine), no leaching of the ligand could be observed. Furthermore, the high pH of the buffer solution (pH 13.0) which is necessary to provide the amines in the unprotonated form does not destroy or affect the membrane components and its response. The stability of the membrane on exposure to 1-propylamine is shown in Figure 5. The shelf lifetime of the membranes exceeded 2 months when stored in the dark at room temperature.

Sensor Response of M2. A similar behavior is found when measuring the fluorescence of membrane M2. The fluorescence excitation maxima of the chromogenic ligand in plasticized PVC were located at 453 and 468 nm, and the emission maximum at 576 nm (see Figure 6) . Exposure to amines results in a decrease in fluorescence intensity at 572. At the same time the conversion of the ligand resulted in an increase in the fluorescence of the hemiaminal form with an excitation maximum at 384 nm and an emission maximum at 426 nm. Since the fluorescence intensity of the hemiaminal is at a shorter wavelength, the fluorescence of the trifluoroacetyl form is chosen for further investigations.

The fluorescence of the sensor membrane M2 on exposure to solutions containing 1-butylamine decreases significantly at 572 nm (when excited at 453 nm). The response is fully reversed on exposure to 0.1 M sodium hydroxide. The relative decrease in the fluorescence of M2 in going from zero to 500 mM 1-butylamine is as high as - 90%. The forward response time, $t_{95}$ (for 95% of the total signal change to occur), is in the range of 5 - 7 min, whereas the time for the reverse response is in the range of 5 - 10 min. The LOD of M2 for 1-butylamine is 3 mM. The selectivity of M2 for primary secondary and tertiary amines is shown in Figure 7 and the $\log K_{opt.}$ values in Table 3. With the exception of aniline, the selectivity pattern is similar to M1. In the case of aniline, fluorescence quenching accounts for the enhanced sensitivity because not only the fluorescence of the trifluoroacetyl form was decreased but also the fluorescence of the hemiaminal form was quenched and was much smaller than in the case of the aliphatic amines.

Table 3: Selectivity Coefficients ($\log K_{opt}$) of M2 for Aliphatic and Aromatic Amines in Comparison to 1-Butylamine

| *amine* | *$\log K_{opt}$* | *amine* | *$\log K_{opt}$* |
|---|---|---|---|
| ammonia | -2.48 | iso-propylamine | -1.82 |
| methylamine | -1.30 | 1-butylamine | 0.00 |
| ethylamine | -1.27 | tert-butylamine | -1.77 |
| diethylamine | -1.63 | 1-hexylamine | 0.92 |
| triethylamine | -1.18 | pyridine | -1.48 |
| 1-propylamine | -0.68 | aniline | 0.10 |

Performance of Amine-Sensitive Membranes :

The trifluoroacetyl azo and stilbene ligands *N,N*-dioctylaminophenyl-4'-trifluoroacetyl-azobenzene ($ETH^T$ 4001) and *N,N*-dioctylamino-4'-trifluoroacetylstilbene ($ETH^T$ 4004) embedded in plasticized PVC show a significant change of absorbance and fluorescence on exposure to aqueous samples of aliphatic amines. This response is due to a nucleophilic

reaction of amines with the highly electrophilic trifluoroacetyl group. The conversion of the trifluoroacetyl group into the hemiaminal changes the optical properties of the ligands.

M1 exhibits largest signal changes on exposure to primary amines with long unbranched alkyl chains. The selectivity is governed by their increasing lipophilicity, and is highest for 1-hexylamine. Although the lipophilicity of tert-butylamine and iso-propylamine are comparable to the ones of their unbranched analogues, the response of the sensor membrane M1 to the branched amines is significantly lower. This difference can be attributed to the fact that the branched amines have a sterically demanding structure, and consequently do not approach the trifluoroacetyl group. A similar effect is observed for secondary and tertiary amines as well as for the aromatic amines. These species are hindered to approach the trifluoroacetyl group due to the bulky groups close to the amino moiety. In the case of aniline, the lower nucleophilicity has to be considered as well.

The response of the sensor membrane M2 is somewhat different to M1, in that M2 exhibits a lower sensitivity. This is caused by the different reactivity of *N,N*-dioctylamino-4'-trifluoroacetylstilbene ($ETH^T$ 4004) compared to *N,N*-dioctylaminophenyl-4'-trifluoroacetyl-azobenzene ($ETH^T$ 4001). The azo group para to the trifluoroacetyl group is a strong electron-acceptor (Hammett constant $\sigma_p$ = 0.39) whereas the stilbene moiety exhibits no significant electron acceptor strength (Hammett constant $\sigma_p$ = -0.07). Consequently, the trifluoroacetyl group is activated by the presence of the electron acceptor and more easily reacts with nucleophilic analytes. Furthermore, M2 shows large signal changes upon exposure to aromatic amines. These signal changes are caused by fluorescence quenching.

If a fluorescent sensor membrane with a selectivity and sensitivity similar to M1 is required, it is possible to make use of the inner filter effect of fluorescence. The ligand $ETH^T$ 4001 is then combined with an inert fluorophor which exhibits a fluorescence maximum at around 490 nm. If the absorbance of $ETH^T$ 4001 at 490 nm decreases on exposure to amines, then the fluorescence of the inert fluorophor at 490 nm is increased. Sensors which make use of the inner filter effect have already been shown to be useful for measurement of potassium or sodium.

<u>Example 4 : cross-sensitivity to carbonate, ethanol and varying pH</u>

Both M1 and M2 are investigated for their sensitivity to potential interferents. Trifluoroacetophenone derivatives are well-known ion carriers for carbonate anion and they respond to alcohols. Consequently, the response of M1 and M2 to a 0.1 M solution of carbonate at pH 13.0 has to be investigated.

Basically no signal change is observed. In the case of M1, the lack of sensitivity is caused by the lack of the cationic site. The sensor membrane only contains neutral species. If carbonate anion is to be extracted into to sensor membrane, then a double-negatively charged ion would be present in the polymer matrix. The plasticized polymer, however, requires electroneutrality within the membrane. Consequently, no anions are extracted into the polymer. A transport of anions into the membrane would be possible if cationic sites would compensate the negative charge of the carbonate anion. M1 and M2 do not contain any ionic sites, and only consist of polymer, plasticizer and ligand. In the case of M2, the presence of the PTFE-coating additionally prevents any interferences from ionic species.

The sensitivity of membranes M1 and M2 to alcohols is low compared with the sensitivity to amines. Whereas the sensor membranes used for ethanol measurement respond to ethanol in the 0.7 to 7.0 M range, the response of M1 and M2 to amines is in the mM range. Furthermore, the sensor membranes for ethanol only show sufficient response in the presence of a catalyst In the present investigation, no such catalyst is used.

There is a significant effect of pH in that the concentration of amines in aqueous solution is pH-dependent. The $pK_a$ value of aliphatic amines generally is around 11. At higher pH, virtually all amines are present in the electrically neutral form and large signal changes of the sensor membranes on exposure to amines are observed. If M1 is exposed to 0.1 M 1-butylamine at pH 6.8, no signal change is observed. Consequently, the sensor membranes respond to amines only in the electrically neutral form, whereas they do not respond to amines in the protonated ammonium form.

## Claims

1. A method of determining amines by bringing said amines into contact with a reactand, **characterized in that** the amines are of the formula

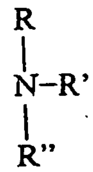

wherein

R, R' and R" represent independently from each other hydrogen or an aliphatic or cycloaliphatic or heterocyclic or aromatic group, with the proviso that not all three groups R, R' and R" could be hydrogen,
and that the reactand is a keto compound of the formula I

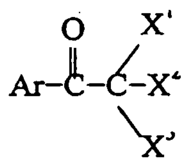

(I)

wherein
Ar is an unsubstituted or substituted, mononuclear or polynuclear aromatic group or an unsubstituted or substituted, mononuclear or polynuclear heterocyclic group of aromatic character, the substituents being nonpolar substituents, substituents with weakly polar properties, substituents with basic properties, substituents having electron-donor or -acceptor groups, substituents to immobilize the reactand by attaching it (covalently) to a polymer and/or chromophoric groups and/or groups, which induce a fluorescence or luminescence or a variation of a vibration frequency or a variation of conductivity, and
$X^1$, $X^2$ and $X^3$ independently from one another are hydrogen atoms, alkyl groups, alkenyl groups, alkynyl groups, fluorine atoms, chlorine atoms, bromine atoms, cyano or nitro groups, with the proviso, however, that at least one of the substituents $X^1$, $X^2$ and $X^3$ is a strongly electron-withdrawing substituent selected from the group comprising fluorine atoms, chlorine atoms, bromine atoms, cyano or nitro groups, whereby
a hemiaminal or a zwitterion of formula II:

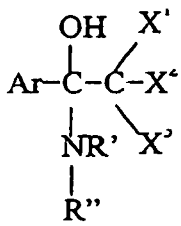

or

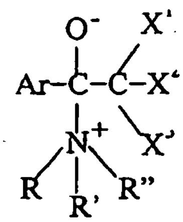

(II)

is reversibly formed upon contact with the keto compound of formula I and the keto compound of formula I is differing from the hemiaminal or zwitterion in its light absorption in the ultraviolet, visible or infrared region, or the formation of a hemiaminal being accompanied by the creation or quenching of a fluorescence or luminescence, or the variation of a vibration frequency or a variation of conductivity.

2. A method according to claim 1, **characterized in that** the amine is brought into contact with a keto compound of formula I in which Ar is a benzene ring, a napthalene, phenanthrene or anthracene skeleton or a mononulear or polynuclear heterocyclic group from the group comprising thiophene, furan, benzofuran and benzothiophene, and preferably a mononuclear or polynuclear heterocyclic group of aromatic character which has at least one nitrogen atom as the heteroatom, preferably pyrrole, diazole, triazole, pyridine, bipyridine, thiazole, 1,2-diazine, 1,3-diazine,

1,4-diazine (pyrazine), 1,3,5-triazine, 1,2,4,-triazine, tetrazine, monoazanaphthalnes such as 1-azanaphthalene (quinoline) and 2-azanaphthalene (isoquinoline), diazanaphthalenes, triazanaphthalenes, indole, carbazole, monoazaanthracenes, monoazaphenanthrenes, for example acridine and phenacridine, diazaanthracenes and diazaphenanthrenes, like phenanthroline, and triaza- and tetraza-anthracenes and -phenanthrenes, or metal complexes of said heterocyclic compounds such as metalloporphyrines like palladium, cobalt, iron, gallium, indium, manganese, copper, osmium, rhodium or chromium porphyrines or metallophenanthrolines or metallobipyridyl complexes in particular, preferably with ruthenium, chromium, platinium, copper, osmium, rhodium or rhenium as metal centers.

**3.** A method according to one of the claims 1 to 2, **characterized in that,** in the keto compounds of formula I or hemiaminals of formula II, at least two of the groups $X^1$, $X^2$ and $X^3$ are strongly electron-withdrawing substituents selected from the group comprising fluorine atoms, chlorine atoms, bromine atoms, cyano or nitro groups, and the group of the formula

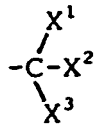

is preferably a trifluoromethyl group.

**4.** A method according to one of the claims 1 to 3, **characterized in that** the keto compound of formula I used is an azoketo compound of formula III :

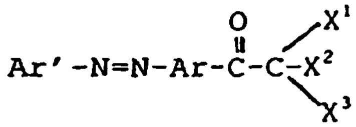

wherein the groups

Ar and Ar' independently from one another are substituted or unsubstituted, mononuclear or polynuclear aromatic groups or substituted or unsubstituted, mononuclear heterocyclic groups of aromatic character, and
$X^1$, $X^2$ and $X^3$ are as defined in formula I.

**5.** A method according to claim 4, **characterized in that** the azoketo compound is N,N-dioctylaminophenyl-4'-trifluoroacetyl-azobenzene.

**6.** A method according to one of the claims 1 to 3, **characterized in that** the keto compound of formula I used is one of the formula IV :

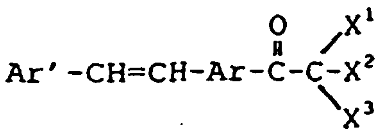

wherein the groups

Ar and Ar' independently of one another are substituted or unsubstituted, mononuclear or polynuclear aromatic groups or substituted or unsubstituted, mononuclear heterocyclic groups of aromatic character, and
$X^1$, $X^2$ and $X^3$ are as defined in formula I.

**7.** A method according to claim 6, **characterized in that** the keto compound is N,N-dioctylamino-4'-trifluoroacetylstilbene.

**8.** A method according to one of claims 1 to 7, **characterized in that** amines of the formula

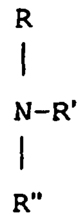

are determined whereby the groups R, R’ and R" represent independently from each other hydrogen, an alkyl group, a cycloalkyl, aromatic or heterocyclic group having 1 to 10 carbon atoms, with the proviso that not all three groups R, R’ and R" could be hydrogen.

**9.** A method according to claim 8, **characterized in that** the amines are selected from the group comprising methyl amine, ethyl amine, diethyl amine, triethylamine, 1-propylamine, iso-propylamine, dipropylamine, tripropylamine, 1-butylamine, iso-butylamine, pyrrolidine, aniline, pyridine, choline, purine derivatives and amino acids.

**10.** A method according to one of claims 1 to 9, **characterized in that** the keto compound of the formula I is present in a support, preferably a polymer material, and **in that** the conversion of the keto compound of formula I to the hemiaminal of formula II takes place on or in this support.

**11.** A method according to one of claims. 1 to 10, **characterized in that** the keto compound of the formula I constitutes part of an optical sensor which changes its light absorption in the ultraviolet, visible or infrared region, or in which a fluorescence or luminescence is created or quenched, or a variation of a vibration frequency is achieved, as soon as this optical sensor comes into contact with an amine of the formula

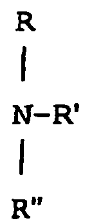

the keto compound of the formula I representing the reactand of the sensor which is converted to the hemiaminal of the formula II on contact with the amine to be determined.

**12.** A method according to claim 11, **characterized in that** the sensor has a support in or on which the keto compound of formula I is present, and **in that** this is preferably a polymer material, for example cellulose, a cellulose derivative, a silicon-containing polymer material, for example a silicon rubber, a polymer material based on a polyester, a polyamide, a polyacrylamide, a polyether, polyurethanes or polymethacylates or polyacrylates or polysiloxanes, or a homopolymer or copolymer of an ethylenically unsaturated monomer, for example a homopolymer or copolymer based on polystyrene, polyvinyl alcohol, polybutadiene, polyethylene, polypropylene and especially a halogenated, ethylenically unsaturated monomer, for example a homopolymer or copolymer of chlorinated or fluorinated, ethylenically unsaturated monomer materials, especially vinyl chloride.

**13.** A method according to claim 12, **characterized in that** the polymer component of the sensor contains a plasticizer; preferably a plasticizer based on an ether or an ester, for example a dicarboxylic acid diester or tetracarboxylic acid tetra ester, these esters each having longer-chain alcohol components, for example esters of adipic acid or sebacic acid with alcohol components having 4 to 12 carbon atoms, for example bis(2-ethylhexyl)sebacate or o-cyanooctylphenylether.

**14.** A method according to one of claims 1 to 13, **characterized in that** a qualitative, quantitative or semiquantitative determination of amines is performed on liquid or gaseous samples, for example solutions, suspension or residues of industrial or agricultural origin, or liquid or gaseous samples of biological origin, for example urine, blood serum or plasma, or food products by bringing these samples into contact with an optical sensor which contains a keto compound of formula I as the optical indicator.

**15.** Use of a device containing a keto compound of formula I defined in process claims 1 to 7 for the qualitative, quantitative or semiquantitative determination of amines of the formula

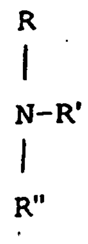

in which R, R' and R" represent independently from each other hydrogen, an alkyl group, a cycloalkyl, aromatic or heterocyclic group, with the proviso that not all three groups R, R' and R" could be hydrogen, **characterized in that** liquid or gaseous samples whose amine content is to be determined are brought into contact with the device, the keto compound of formula I present in the device as the indicator reacting with the amine to form a hemiaminal or zwitterion, thereby causing a change in the absorption spectrum which corresponds in its order of magnitude to the amine concentration.

**16.** Use according to claim 15, **characterized in that** the device is used for solutions, suspension or residues of industrial or agricultural origin, or liquid or gaseous samples of biological origin, for example urine, blood serum or plasma, or food products.

**17.** Use according to claim 15 or 16, **characterized in that** a device is used in which the keto compound of formula I is present on or in a support, preferably a polymer material, and that this sensor is brought into contact with the liquid or gaseous sample whose amine content is to be determined.

**Patentansprüche**

**1.** Verfahren zur Bestimmung von Aminen durch in Kontakt bringen dieser Amine mit einem Reaktanden, **dadurch gekennzeichnet, dass** die Amine die Formel

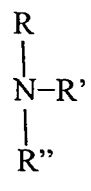

aufweisen, worin

R, R' und R" unabhängig von einander Wasserstoff oder eine aliphatische oder cycloaliphatische oder heterocyclische oder aromatiche Gruppe bedeuten, mit dem Vorbehalt, dass nicht alle drei Gruppen R, R' und R" Wasserstoff sein können,
und dass der Reaktand eine Ketoverbindung der folgenden Formel I ist,

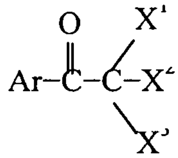

(I)

in der

Ar eine unsubstituierte oder substituierte einkernige oder mehrkernige aromatische Gruppe oder eine unsubstituierte oder substituierte ein- oder mehrkernige heterocyclische Gruppe mit aromatischem Charakter ist, wobei die Substituenten apolare Substituenten sind, Substituenten mit schwach polaren Eigenschaftenten, Substituenten mit basischen Eigenschaften, Substituenten mit Elektronendonor- oder Elektronenakzeptorgruppen, Substituenten zur Immobilisierung der Reaktanden durch deren Anbinden (kovalent) an ein Polymer und/oder chromophore Gruppen und/oder Gruppen, welche eine Fluoreszenz oder eine Lumineszenz oder eine Variation einer Vibrationsfrequenz oder eine Variation in der Leitfähigkeit induzieren, und

$X^1$, $X^2$ und $X^3$ unabhängig von einander Wasserstoffatome, Alkylreste, Alkenylreste, Alkinylreste, Fluoratome, Chloratome, Bromatome, Cyano- oder Nitrogruppen sind, jedoch mit dem Vorbehalt, dass mindestens einer der Substituenten $X^1$, $X^2$ und $X^3$ ein stark elektronenziehender Substituent ist, ausgewählt aus der Gruppe umfassend Fluoratome, Chloratome, Bromatome, Cyano- oder Nitrogruppen, wobei bei Kontakt mit der Ketoverbindung der Formel I reversibel

ein Halbaminal (Halbaminoacetal) oder ein Zwitterion der Formel II:

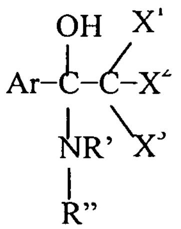

oder

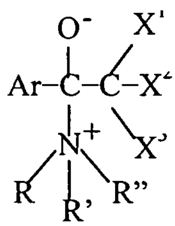

(II)

gebildet wird, und sich die Ketoverbindung der Formel I vom Halbaminal oder Zwitterion in der Lichtabsorption im ultravioletten, sichtbaren oder Infrarot-Bereich unterscheidet, oder die Bildung eines Halbaminals von der Erzeugung oder dem Löschen einer Fluoreszenz oder Lumineszenz oder einer Variation einer Vibrationsfrequenz oder einer Variation in der Leitfähigkeit begleitet wird.

2. Verfahren gemäss Anspruch 1, **dadurch gekennzeichnet, dass** das Amin in Kontakt mit einer Ketoverbindung der Formel I gebracht wird, in der Ar ein Benzolring, ein Napthalin-, Phenanthren- oder Anthracen-Gerüst oder ein einkerniger oder mehrkerniger heterocyclischer Rest aus der Gruppe umfassend Thiophen, Furan, Benzofuran und Benzothiophen ist, und vorzugsweise ein einkerniger oder mehrkerniger heterocyclischer Rest mit aromatischem Character, welcher mindestens ein Stickstoffatom als Heteroatom enthält, vorzugsweise Pyrrol, Diazol, Triazol, Pyridin, Bipyridin, Thiazol, 1,2-Diazin, 1,3-Diazin, 1,4-Diazin (Pyrazin), 1,3,5-Triazin, 1,2,4,-Triazin, Tetrazin, Monoazanaphthaline, wie 1-Azanaphthalin (Quinolin) und 2-Azanaphthalin (Isoquinolin), Diazanaphthaline, Triazanaphthaline, Indol, Carbazol, Monoazaanthracene, Monoazaphenanthrene, zum Beispiel Acridin und Phenacridin, Diazaanthracene und Diazaphenanthrene, wie Phenanthrolin, und Triaza- und Tetraza-anthracene und -phenanthrene, oder Metalllkomplexe dieser heterocyclischen Verbindungen, wie Metalloporphyrine, wie Palladium-, Cobalt-, Eisen-, Gallium-, Indium-, Mangan-, Kupfer-, Osmium-, Rhodium- oder Chromporphyrine, oder Metallophenanthroline oder insbesondere Metallobipyridylkomplexe, vorzugsweise mit Ruthenium, Chrom, Platin, Kupfer, Osmium, Rhodium oder Rhenium als Metallzentrum.

3. Verfahren gemäss einem der Ansprüche 1 bis 2, **dadurch gekennzeichnet, dass** in der Ketoverbindung der Formel I oder den Halbaminalen der Formel II mindestens zwei der Gruppen $X^1$, $X^2$ und $X^3$ stark elektronenziehende Substituenten, ausgewählt aus der Gruppe umfassend Fluoratome, Chloratome, Bromatome, Cyano- oder Nitrogruppen, sind und die Gruppe der Formel

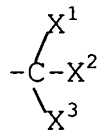

vorzugsweise eine Trifluormethylgruppe ist.

4. Verfahren gemäss einem der Ansprüche 1 bis 3, **dadurch gekennzeichnet, dass** die verwendete Ketoverbindung der Formel I eine Azoketoverbindung der Formel III ist:

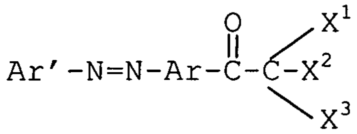

in der die Gruppen

Ar und Ar' unabhängig von einander substituierte oder unsubstituierte, einkernige oder mehrkernige aromatische Gruppen oder substituierte oder unsubstituierte, einkernige heterocyclische Gruppen mit aromatischem Charakter und
$X^1$, $X^2$ und $X^3$ wie in Formel I definiert sind.

5. Verfahren gemäss Anspruch 4, **dadurch gekennzeichnet, dass** die Azoketoverbindung N,N-Dioctylaminophenyl-4'-trifluoracetyl-azobenzol ist.

6. Verfahren gemäss einem der Ansprüche 1 bis 3, **dadurch gekennzeichnet, dass** die verwendete Ketoverbindung der Formel I eine Ketoverbindung der Formel IV ist:

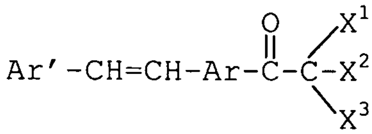

in der die Gruppen

Ar und Ar' unabhängig von einander substituierte oder unsubstituierte, einkernige oder mehrkernige aromatische Gruppen oder substituiete oder unsubstituierte einkernige heterocyclische Gruppen mit aromatischem Charakter und
$X^1$, $X^2$ und $X^3$ wie in Formel I definiert sind.

7. Verfahren gemäss Anspruch 6, **dadurch gekennzeichnet, dass** die Ketoverbindung N,N-Dioctylamino-4'-trifluoracetylstilben ist.

8. Verfahren gemäss einem der Ansprüche 1 bis 7, **dadurch gekennzeichnet, dass**

Amine der Formel

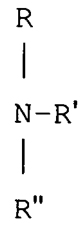

bestimmt werden, wobei die Gruppen R, R’ und R" unabhängig von einander Wasserstoff, eine Alkylgruppe, eine Cycloalkyl-, aromatische oder heterocyclische Gruppe mit 1 bis 10 Kohlenstoff-Atomen bedeuten, mit dem Vorbehalt, dass nicht alle drei Gruppen R, R’ und R" Wasserstoff sein können.

**9.** Verfahren gemäss Anspruch 8, **dadurch gekennzeichnet, dass** die Amine ausgewählt sind aus der Gruppe umfassend Methylamin, Ethylamin, Diethylamin, Triethylamin, 1-Propylamin, Isopropylamin, Dipropylamin, Tripropylamin, 1-Butylamin, Isobutylamin, Pyrrolidin, Anilin, Pyridin, Cholin, Purin-Derivate und Aminosäuren.

**10.** Verfahren gemäss einem der Ansprüche 1 bis 9, **dadurch gekennzeichnet, dass** die Ketoverbindung der Formel I in einem Träger vorhanden ist, vorzugsweise einem Polymermaterial, und dass die Umsetzung der Ketoverbindung der Formel I zum Halbaminal der Formel II auf oder in diesem Träger stattfindet.

**11.** Verfahren gemäss einem der Ansprüche 1 bis 10, **dadurch gekennzeichnet, dass** die Ketoverbindung der Formel I einen Teil eines optischen Sensors darstellt, welcher seine Lichtabsorption im ultravioletten, sichtbaren oder Infrarot-Bereich ändert, oder in welchem eine Fluoreszenz oder Lumineszenz erzeugt oder gelöscht wird oder eine Variation einer Vibrationsfrequenz erzielt wird, sobald der optische Sensor in Kontakt kommt mit einem Amin der Formel

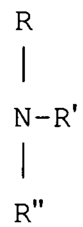

wobei die Ketoverbindung der Formel I den Reaktanden des Sensors darstellt, welcher bei Kontakt mit dem zu bestimmenden Amin ins Halbaminal der Formel II konvertiert wird.

**12.** Verfahren gemäss Anspruch 11, **dadurch gekennzeichnet, dass** der Sensor einen Träger aufweist, in oder auf dem die Ketoverbindung der Formel I vorliegt, und dadurch, dass dieser vorzugsweise ein Polymermaterial ist, beispielsweise Cellulose, ein Cellulosederivat, ein Silikon enthaltendes Polymermaterial, beispielsweise ein Silikongummi, ein Polyester basiertes Polymermaterial, ein Polyamid, ein Polyacrylamid, ein Polyether, Polyurethane oder Polymethacylate oder Polyacrylate oder Polysiloxane, oder ein Homopolymer oder Copolymer eines ethylenisch ungesättigten Monomers, beispielsweise ein Homopolymer oder Copolymer, welches auf Polystyrol Polyvinylalcohol, Polybutadien, Polyethylen, Polypropylen und insbesondere einem halogenierten ethylenisch ungesättigten Monomer basiert, beispielsweise ein Homopolymer oder Copolymer von chlorierten oder fluorierten ethylenisch ungesättigten Monomermaterialien, insbesondere Vinylchlorid.

**13.** Verfahren gemäss Anspruch 12, **dadurch gekennzeichnet, dass** die Polymerkomponente des Sensors einen Weichmacher enthält; vorzugsweise einen auf einem Ether oder Ester basierenden Weichmacher, beispielsweise einem Dicarbonsäurediester oder Tetracarbonsäuretetraester, wobei diese Ester je längerkettige Alkoholkomponenten aufweisen, beispielsweise Ester von Adipinsäure oder Sebacinsäure mit Alkoholkomponenten, welche 4 bis 12 Kohlenstoffatome aufweisen, beispielsweise bis-(2-Ethylhexyl)sebacat oder o-Cyanooctylphenylether.

**14.** Verfahren gemäss einem der Ansprüche 1 bis 13, **dadurch gekennzeichnet, dass** eine qualitative, quantitative

oder semi-quantitative Bestimmung der Amine in flüssigen oder gasförmigen Proben durchgeführt wird, beispielsweise in Lösungen, Suspensionen oder Rückständen industriellen oder landwirtschaftlichen Ursprungs, oder in flüssigen oder gasförmigen Proben biologischen Ursprungs, beispielsweise Urin, Blutserum oder Blutplasma oder in Nahrungsmittelprodukten, durch in Kontakt bringen dieser Proben mit einem optischen Sensor, welcher eine Ketoverbindung der Formel I als optischen Indikator enthält.

**15.** Verwendung einer Vorrichtung enthaltend eine Ketoverbindung der Formel I wie in den Verfahrensansprüchen 1 bis 7 definiert, für die qualitative, quantitative oder semi-quantitative Bestimmung von Aminen der Formel

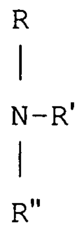

in welcher R, R' und R" unabhängig von einander Wasserstoff, eine Alkylgruppe, eine Cycloalkyl-, aromatische oder heterocyclische Gruppe bedeuten, mit dem Vorbehalt, dass nicht alle drei Gruppen R, R' und R" Wasserstoff sein können, **dadurch gekennzeichnet, dass** flüssige oder gasförmige Proben, deren Amingehalt bestimmt werden soll, mit der Vorrichtung in Kontakt gebracht werden, dass die Ketoverbindung der Formel I, in der Vorrichtung als ein Indikator vorhanden, mit dem Amin unter Bildung eines Halbaminals oder Zwitterions reagiert, wobei er eine Änderung im Absorptionsspektrum bewirkt, welche ihrer Grössenordnung nach der Aminkonzentration entspricht.

**16.** Verwendung gemäss Anspruch 15, **dadurch gekennzeichnet, dass** die Vorrichtung verwendet wird für Lösungen, Suspensionen oder Rückstände industriellen oder landwirtschaftlichen Ursprungs oder für flüssige oder gasförmige Proben biologischen Ursprungs, beispielsweise Urin, Blutserum oder Blutplasma, oder Nahrungsmittelprodukte.

**17.** Verwendung gemäss Anspruch 15 oder 16, **dadurch gekennzeichnet, dass** eine Vorrichtung verwendet wird, in der die Ketoverbindung der Formel I auf oder in einem Träger, vorzugsweise einem polymeren Material, vorhanden ist, und dass dieser Sensor mit der flüssigen oder gasförmigen Probe, deren Amingehalt bestimmt werden soll, in Kontakt gebracht wird.

## Revendications

**1.** Procédé de détermination d'amines consistant à mettre les dits amines en contact avec un réactif, **caractérisé en ce que** les amines présentent la formule

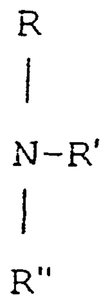

dans laquelle

R, R' et R" représentent, indépendamment l'un de l'autre, de l'hydrogène ou un groupe aliphatique ou cycloaliphatique ou hétérocyclique ou aromatique, à condition que les trois groupes R, R' et R" ne puissent pas tous être de l'hydrogène,

et **en ce que** le réactif est un composé cétonique qui présente la formule 1

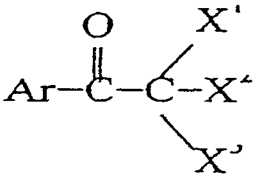

(I)

dans laquelle
Ar est un groupe aromatique mononucléaire ou polynucléaire substitué ou non substitué ou un groupe hétérocyclique mononucléaire ou polynucléaire, substitué ou non substitué de type aromatique, les substituants étant des substituants apolaires, des substituants ayant des propriétés faiblement polaires, des substituants ayant des propriétés basiques, des substituants ayant des groupes électrodonneurs ou électroaccepteurs, des substituants pour immobiliser le réactif en l'attachant (de manière covalente) à un polymère et/ou des groupes chromophores et/ou des groupes induisant une fluorescence ou une luminescence ou une variation d'une fréquence de vibration ou une variation de la conductivité, et
$X^1$, $X^2$ et $X^3$ sont, indépendamment l'un de l'autre, des atomes d'hydrogène, des groupes alkyles, des groupes alkényles, des groupes alkynyles, des atomes de fluor, des atomes de chlore, des atomes de brome, des groupes cyano ou nitro, à condition toutefois qu'au moins un des substituants $X^1$, $X^2$ et $X^3$ soit un substituant fortement électroattracteur choisi parmi le groupe comprenant des atomes de fluor, des atomes de chlore, des atomes de brome, des groupes cyano ou nitro,
un hémiaminal ou un ion mixte selon la formule II :

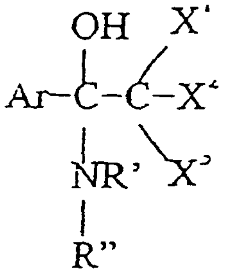

ou

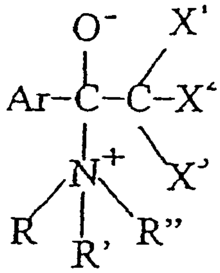

(II)

étant, ainsi, formé de manière réversible par le contact avec le composé cétonique de la formule I, composé cétonique qui diffère du hémiaminal ou de l'ion mixte en ce qui concerne son absorption de lumière dans le domaine ultraviolet, visible ou infrarouge, ou la formation d'un hémiaminal étant accompagné de la création ou de l'extinction d'une fluorescence ou d'une luminescence ou de la variation d'une fréquence de vibration ou de la variation d'une conductivité.

2. Procédé suivant la revendication 1, **caractérisé en ce que** l'amine est mis en contact avec un composé cétonique de la formule I, dans laquelle Ar est un anneau benzénique, un squelette naphtalène, phénanthrène ou anthracène ou un groupe hétérocyclique mononucléaire ou polynucléaire parmi un groupe comprenant le thiofène, le furanne, la coumarone, le benzothiofène et, de préférence, un groupe hétérocyclique mononucléaire ou polynucléaire de type aromatique ayant au moins un atome d'azote comme hétéroatome, de préférence le pyrolle, le diazole, le triazole, la pyridine, la bipyridine, le thiazole, 1'1,2-diazine, 1' 1,3-diazine, 1'1,4-diazone (la pyrazine), 1'1, 3, 5-triazine, 1'1, 2, 4,-triazine, la tétrazine, les monoazanaphtalènes, tels que 1-azanaphtalène (quinoléine) et 2-azanaphtalène (isoquinoléine), les diazanaphtalènes, les triazanaphtalènes, le benzopyrille, le carbazole, les monoazaanthracènes, les monoazaphénanthrènes, par exemple l'acridine et la phénacridine, les diazaanthracènes et les diazaphénanthrènes, tels que la phénanthroline, et les triaza- et tétraza-anthrazènes et triaza- et tétraza-phénanthrènes, ou des complexes métalliques des dits composés hétérocycliques, tels que des métallo-porphyrines comme les porphyrines de palladium, de cobalt, de fer, de gallium, d'indium, de manganèse, de cuivre, d'osmium, de rhodium ou de chrome ou, en particulier des complexes métallo-phénanthrolines ou des complexes métallo-bipyridyles, de préférence avec du ruthénium, du chrome, du platine, du cuivre, de l'osmium, du rhodium ou du rhénium comme centres métalliques.

3. Procédé suivant une des revendications 1 à2, **caractérisé en ce que** dans les composés cétoniques de la formule 1 ou dans les hémiaminals de la formule II, au moins deux des groupes $X^1$, $X^2$ et $X^3$ sont des substituants fortement électroattracteurs choisis parmi le groupe comprenant des atomes de fluor, des atomes de chlore, des atomes de brome, des groupes cyano ou nitro, et le groupe de la formule

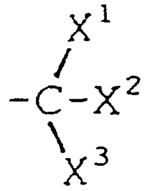

est de préférence un groupe trifluorométhyle.

4. Procédé suivant une des revendications 1 à 3, **caractérisé en ce que** le composé cétonique de la formule I utilisé est un composé azo-cétonique de la formule III :

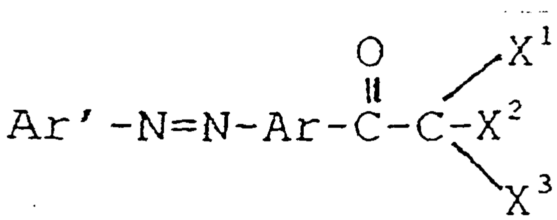

dans laquelle les groupes

Ar et Ar' sont, indépendamment l'un de l'autre, des groupes aromatiques mononucléaires ou polynucléaires substitués ou non substitués ou des groupes hétérocycliques mononucléaires substitués ou non substitués de type aromatique et
$X^1$, $X^2$ et $X^3$ sont comme définis dans la formule I.

5. Procédé suivant la revendication 4, **caractérisé en ce que** le composé azo-cétonique est N,N-dioctylamino-phényle-4'-trifluoroacétyle-azobenzène.

6. Procédé suivant une des revendications 1 à 3, **caractérisé en ce que** le composé cétonique de la formule I utilisé est un composé selon la formule IV :

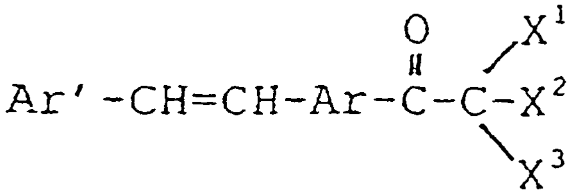

dans laquelle les groupes

Ar et Ar' sont, indépendamment l'un de l'autre, des groupes aromatiques mononucléaires ou polynucléaires substitués ou non substitués ou des groupes hétérocycliques mononucléaires substitués ou non substitués de type aromatique et

$X^1$, $X^2$ et $X^3$ sont comme définis dans la formule I.

7. Procédé suivant la revendication 6, **caractérisé en ce que** le composé cétonique est N,N-dioctylamino-4'-trifluoroacétylstilbène.

8. Procédé suivant une des revendications 1 à 7, **caractérisé en ce que** les amines de la formule

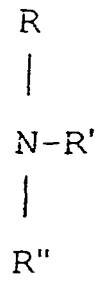

sont déterminés par le fait que les groupes R, R' et R" représentent, indépendamment l'un de l'autre, de hydrogène, un groupe alkyle, un cycloalkyle, un groupe aromatique ou hétérocyclique ayant 1 à 10 atomes de carbone, à condition que les trois groupes R, R' et R" ne puissent pas tous être de l'hydrogène.

9. Procédé suivant la revendication 8, **caractérisé en ce que** les amines sont choisis parmi le groupe comprenant le méthylamine, l'éthylamine, le diéthylamine, le triéthylamine, 1'1-propylamine, l'iso-propylamine, le dipropylamine, le tripropylamine, 1'1-butylamine, l'iso-butylamine, la pyrrolidine, l'aniline, la pyridine, la choline, des dérivés de la purine et des acides aminés.

10. Procédé suivant une des revendications 1 à 9, **caractérisé en ce que** le composé cétonique de la formule I est présent dans un support, de préférence, un matériau polymère et **en ce que** la conversion du composé cétonique de la formule I en hémiaminal de la formule II a lieu sur ou dans ce support.

11. Procédé suivant une des revendications 1 à 10, **caractérisé en ce que** le composé cétonique de la formule I constitue une partie d'un capteur optique qui change son absorption optique dans le domaine ultraviolet, visible ou infrarouge, ou dans lequel une fluorescence ou une luminescence est créée ou éteinte ou une variation d'une fréquence de vibration est réalisée, dès que ce capteur optique entre en contact avec un amine de la formule

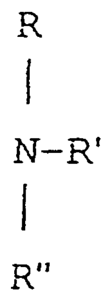

le composé cétonique de la formule I représentant le réactif du capteur qui est converti en hémiaminal de la formule II au moment du contact avec l'amine à déterminer.

12. Procédé suivant la revendication 11, **caractérisé en ce que** le capteur a un support, dans ou sur lequel le composé

cétonique de la formule I est présent, et **en ce qu'**il s'agit, de préférence, d'un matériau polymère, par exemple de cellulose, d'un dérivé de cellulose, d'un matériau polymère contenant de la silicone, par exemple d'une gomme silicone, d'un matériau polymère à base d'un polyester, d'un polyamide, d'un polyacrylamide, d'un polyéther, de polyuréthanes ou polyméthacylates ou polyacrylates ou polysiloxanes ou d'un homopolymère ou copolymère d'un monomère insaturé de façon éthylénique, par exemple d'un homopolymère ou copolymère à base de polystyrène, d'alcool polyvinylique, de polybutadiène, de polyéthylène, de polypropylène et, en particulier, d'un monomère halogéné insaturé de façon éthylénique, par exemple d'un homopolymère ou copolymère de matériaux monomères chlorés ou fluorés insaturés de façon éthylénique, en particulier de chlorure de vinyle.

**13.** Procédé suivant la revendication 12, **caractérisé en ce que** le composant polymère du capteur contient un plastifiant, de préférence un plastifiant à base d'un éther ou d'un ester, par exemple un diester d'acide dicarboxylique ou tétraester d'acide tétracarboxylique, ces esters ayant chacun des composants d'alcool à plus longue chaîne, par exemple des esters d'acide adipique ou d'acide sébacique avec des composants d'alcool ayant 4 à 12 atomes de carbone, par exemple le sébacate de bis(2-éthylhexyle) ou l'o-cyanooctylphényléther.

**14.** Procédé suivant une des revendications 1 à 13, **caractérisé en ce qu'**une détermination qualitative, quantitative ou semi-quantitative d'amines est réalisée sur des échantillons liquides ou gazeux, par exemple des solutions, suspensions ou résidus d'origine industrielle ou agricole, ou sur des échantillons liquides ou gazeux d'origine biologique, par exemple de l'urine, du sérum sanguin ou du plasma, ou des produits alimentaires en mettant ces échantillons en contact avec un capteur optique qui contient un composé cétonique de la formule I en tant qu'indicateur visuel.

**15.** Utilisation d'un dispositif contenant un composé cétonique de la formule I défini dans les revendications de procédé 1 à 7 pour la détermination qualitative, quantitative ou semi-quantitative d'amines de la formule

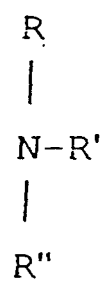

dans laquelle R, R' et R" représentent, indépendamment l'un de l'autre, de l'hydrogène, un groupe alkyle, un cycloalkyle, un groupe aromatique ou hétérocyclique, à condition que les trois groupes R, R' et R" ne puissent pas tous être de l'hydrogène, **caractérisée en ce que** des échantillons liquides ou gazeux, dont le contenu en amine est à déterminer, sont mis en contact avec le dispositif, le composé cétonique de la formule I, présent dans le dispositif en tant qu'indicateur, réagissant avec l'amine pour former un hémiaminal ou un ion mixte, provoquant ainsi un changement dans le spectre d'absorption qui correspond, dans son ordre de grandeur, à la concentration en amine.

**16.** Utilisation suivant la revendication 15, **caractérisée en ce que** le dispositif est utilisé pour des solutions, suspensions ou résidus d'origine industrielle ou agricole, ou pour des échantillons liquides ou gazeux d'origine biologique, par exemple de l'urine, du sérum sanguin ou du plasma, ou des produits alimentaires.

**17.** Utilisation suivant la revendication 15 ou 16, **caractérisée en ce qu'**un dispositif est utilisé, dans lequel le composé cétonique est présent sur ou dans un support, de préférence un matériau polymère, et **en ce que** ce capteur est mis en contact avec l'échantillon liquide ou gazeux, dont le contenu en amine est à déterminer.

**Figure 1**

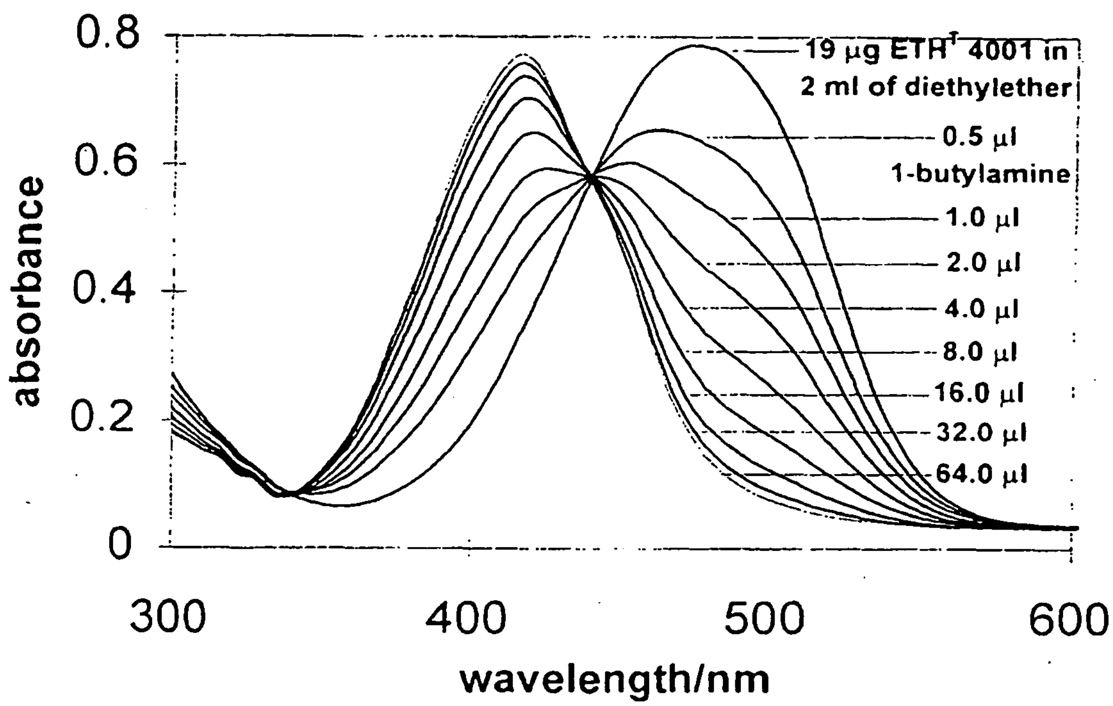
0.8
0.6
0.4
0.2
0
absorbance
300
400
500
600
wavelength/nm
19 µg ETH[T] 4001 in 2 ml of diethylether
0.5 µl 1-butylamine
1.0 µl
2.0 µl
4.0 µl
8.0 µl
16.0 µl
32.0 µl
64.0 µl

**Figure 2**

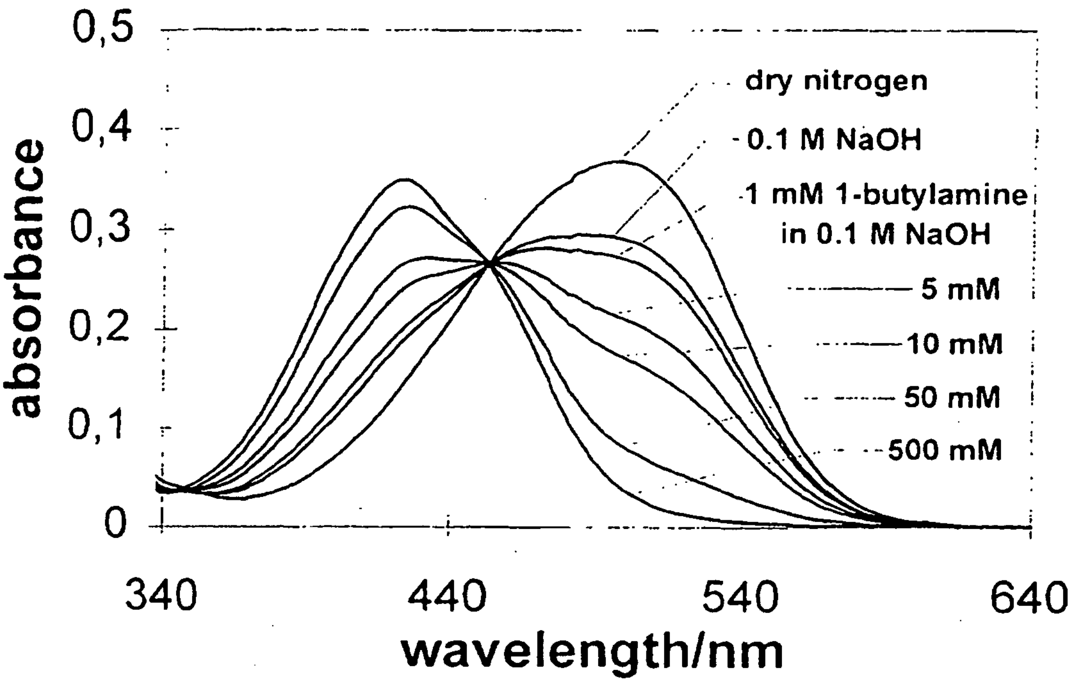
0,5
0,4
0,3
0,2
0,1
0
absorbance
dry nitrogen
0.1 M NaOH
1 mM 1-butylamine
in 0.1 M NaOH
5 mM
10 mM
50 mM
500 mM
340
440
540
640
wavelength/nm

Figure 3

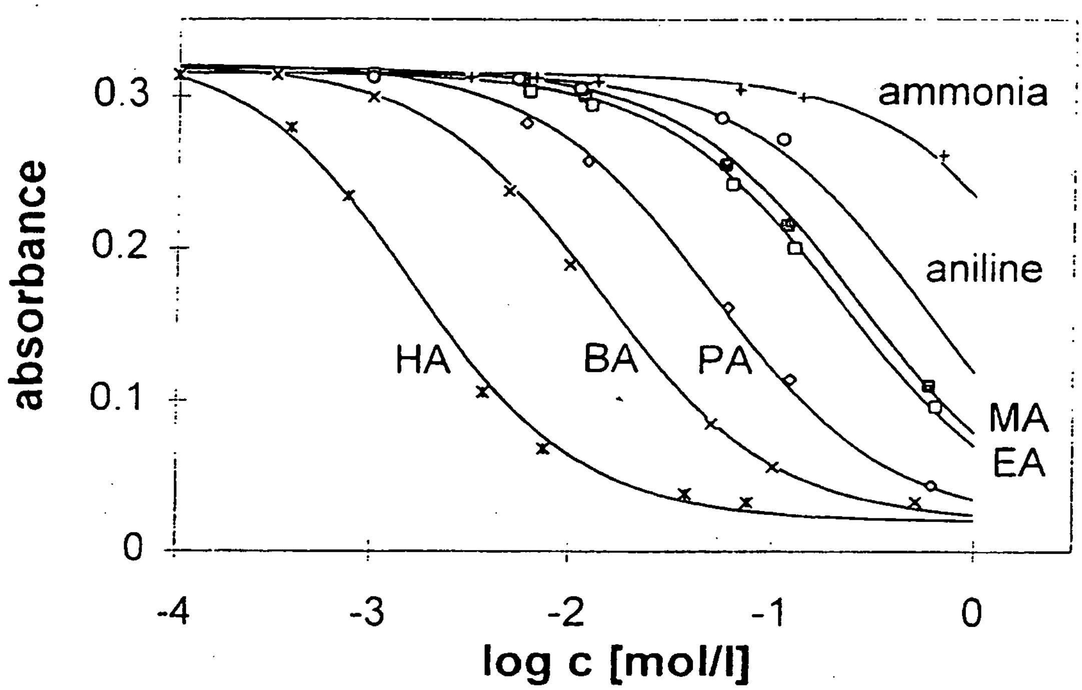
0.3
0.2
0.1
0
absorbance
-4
-3
-2
-1
0
log c [mol/l]
ammonia
aniline
MA
EA
HA
BA
PA

Figure 4

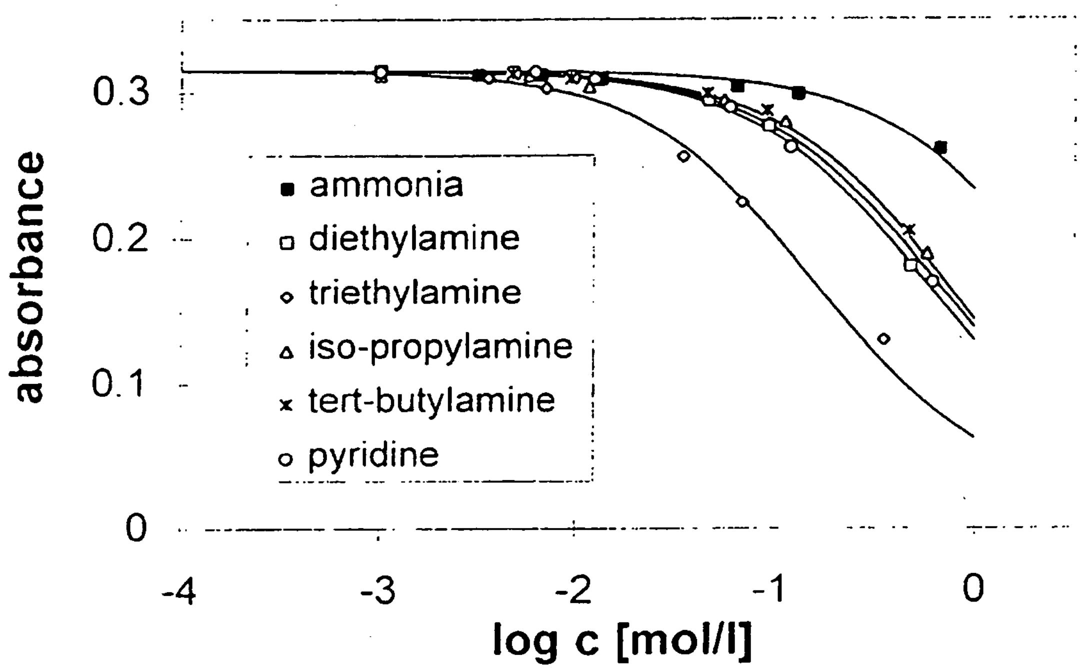
absorbance
0.3
0.2
0.1
0
-4
-3
-2
-1
0
log c [mol/l]
ammonia
diethylamine
triethylamine
iso-propylamine
tert-butylamine
pyridine

**Figure 5**

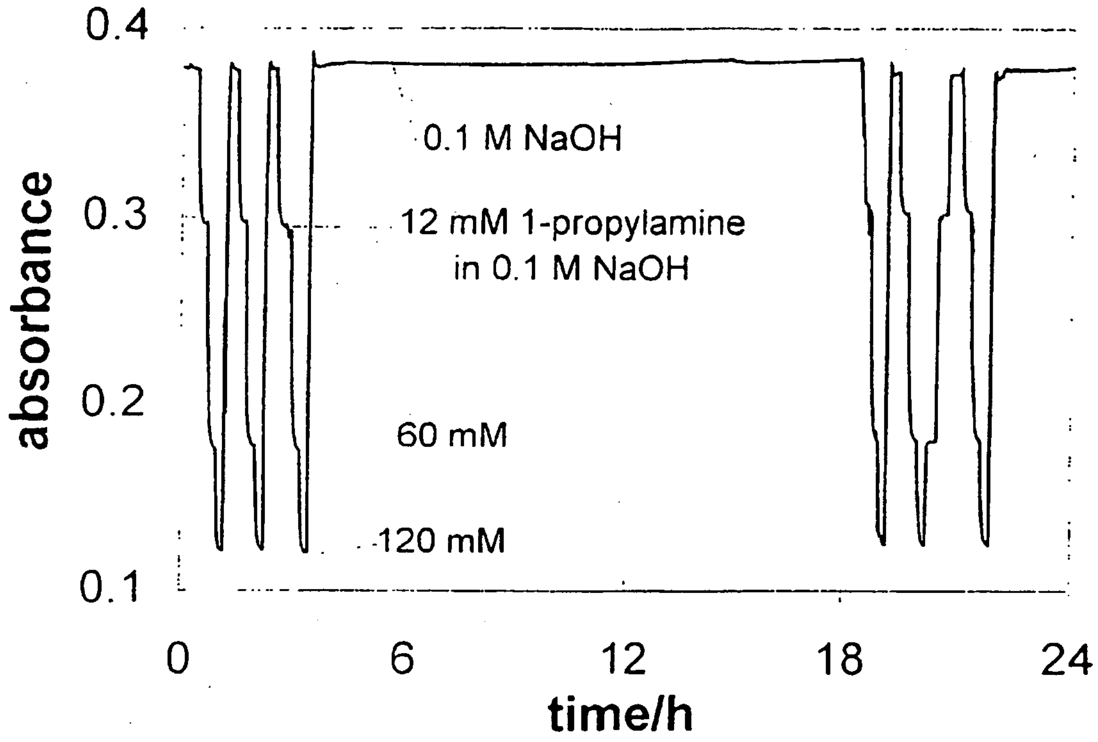
0.4
0.3
0.2
0.1
absorbance
0.1 M NaOH
12 mM 1-propylamine
in 0.1 M NaOH
60 mM
120 mM
0
6
12
18
24
time/h

**Figure 6**

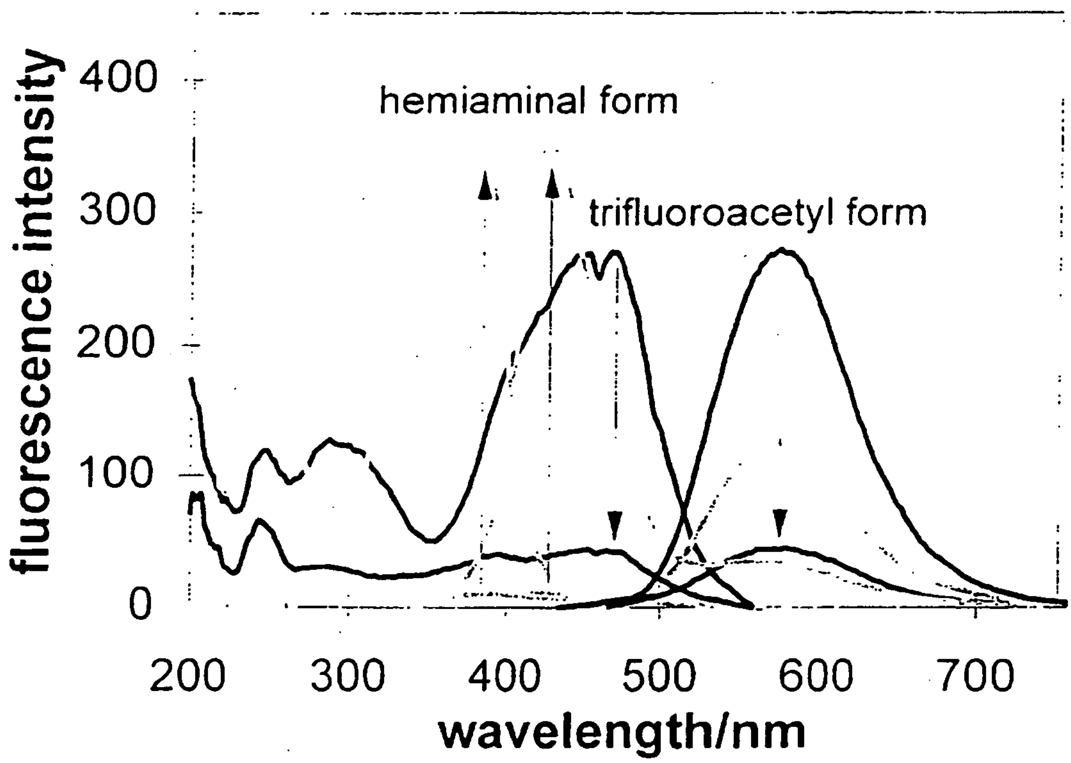
hemiaminal form
trifluoroacetyl form
fluorescence intensity
0
100
200
300
400
200
300
400
500
600
700
wavelength/nm

Figure 7

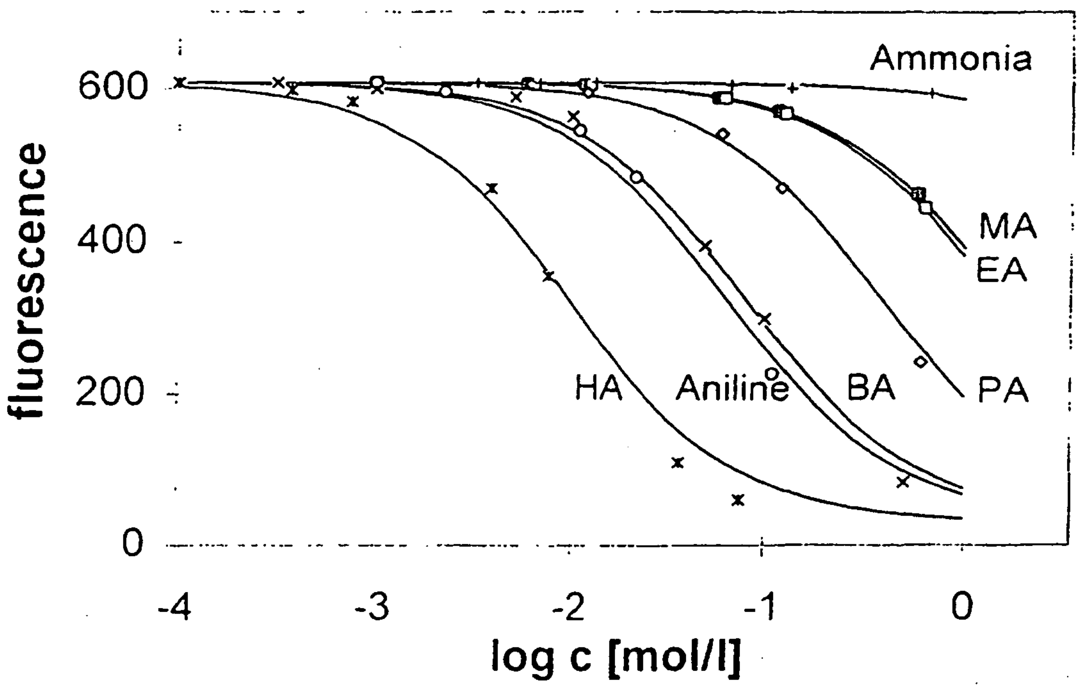
Ammonia
600
400
200
0
fluorescence
MA
EA
PA
BA
Aniline
HA
-4
-3
-2
-1
0
log c [mol/l]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2279739 A
- EP 0281829 A
- EP 0507154 A
- EP 507154 A
- US 4783496 A
- US 4857573 A


### Non-patent literature cited in the description


- **K.; Yagi ; K.; Tohda ; K.; Umezawa, Y.** *Anal. Chem.,* 1993, vol. 65, 1074
- **Chan, W. H. ; Shiu, K. K ; Gin, X. H.** *Analyst,* 1993, vol. 118, 863
- **Y. Kawabata ; T. Yamashiro ; Y. Kitazaki ; T. Imasaka.** *Sens. Act. B,* 1995, vol. 29, 135
- **H. M. Chawla ; K. Srinivas.** *J. Chem. Soc., Chem. Commun.,* 1994, vol. 145, 2593
- **M. McCarrick ; S. J. Harris ; D. Dermot.** *J. Mater. Chem.,* 1994, vol. 4, 217
- **Chan, W. H. ; Lee, A. W. M ; Wang, K.** *Analyst,* 1994, vol. 119, 2809
- **Charlesworth, J. M. ; McDonald, C. A.** *Sens. & Actuat. B,* 1992, vol. 8, 137
- **T. Kaneda ; Y. Sakata.** *Mem. Inst. Sci. Ind. Res.,* 1994, vol. 51, 31
- **Christopher Behringer ; Beatrice Lehmann ; Jean-Pierre Haug ; Kurt Seiler ; Werner E. Morf ; Karel Hartman ; Wilhelm Simon.** *Analytica Chimica Acta,* 1990, vol. 233, 41-47
- **Schilling, M. L. M ; Roth, H. D. ; Herndon, W. C.** *J. Am. Chem. Soc.,* 1980, vol. 102, 4271